(19) **Europäisches Patentamt**
**European Patent Office**
**Office européen des brevets**

(11) **EP 4 571 499 A1**

(12) **EUROPEAN PATENT APPLICATION**
published in accordance with Art. 153(4) EPC

(43) Date of publication:
**18.06.2025 Bulletin 2025/25**

(21) Application number: **23858874.3**

(22) Date of filing: **28.06.2023**

(51) International Patent Classification (IPC):
**G06F 9/4401** (2018.01)

(52) Cooperative Patent Classification (CPC):
**G06F 9/4401**

(86) International application number:
**PCT/CN2023/103441**

(87) International publication number:
**WO 2024/045836 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 CN 202211050001**

(71) Applicant: **Huawei Technologies Co., Ltd.**
**Shenzhen, Guangdong 518129 (CN)**

(72) Inventors:
• **CHEN, Donghui**
  **Shenzhen, Guangdong 518129 (CN)**
• **XIE, Zhipeng**
  **Shenzhen, Guangdong 518129 (CN)**
• **LUAN, Jianhai**
  **Shenzhen, Guangdong 518129 (CN)**
• **REN, Yuxin**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **PARAMETER ADJUSTMENT METHOD AND RELATED DEVICE**

(57) Embodiments of this application provide a parameter tuning method and a related device, and relate to the field of terminal software technologies. The method includes: detecting whether a workload changes when an electronic device runs an online application; if the workload changes during running of the online application, obtaining feature data of the online application, matching the feature data with feature data in a feature library, and determining an application and a workload type that are in the feature library and that match the online application; selecting, from a model library, a parameter tuning model corresponding to the application and the workload type that match the online application; and determining, based on the selected parameter tuning model, an optimal parameter for running the online application. In embodiments of this application, a workload change occurring when the electronic device runs the online application can be detected in real time, and the matched parameter tuning model is selected based on the feature data of the online application, to perform online dynamic parameter tuning based on the parameter tuning model, and improve real-time performance of parameter tuning.

FIG. 7

## Description

This application claims priority to Chinese Patent Application No. 202211050001.8, filed with the China National Intellectual Property Administration on August 30, 2022 and entitled "PARAMETER TUNING METHOD AND RELATED DEVICE", which is incorporated herein by reference in its entirety.

## TECHNICAL FIELD

This application relates to the field of terminal software technologies, and in particular, to a parameter tuning method and a related device.

## BACKGROUND

Operating systems of electronic devices such as a personal computer and a server have a large quantity of tunable parameters for controlling system running, for example, a read/write ratio, a maximum quantity of parallel threads, a cache capacity, and a quantity of CPU (Central Processing Unit, central processing unit) cores. Parameter tuning can improve application execution efficiency, reduce resource usage, and reduce system errors. However, in current parameter tuning methods, parameter tuning is usually performed only for an offline scenario. In this case, when an online application is running and a system workload changes, system parameters cannot be dynamically tuned in real time, potentially affecting normal running of a system.

## SUMMARY

In view of this, a parameter tuning method needs to be provided, to resolve a problem that system parameters cannot be tuned in real time based on a change in a system workload.

According to a first aspect, an embodiment of this application provides a parameter tuning method. The method includes: detecting whether a workload changes when an electronic device runs an online application; if the workload changes during running of the online application, obtaining feature data of the online application, matching the feature data with feature data in a feature library, and determining an application and a workload type that are in the feature library and that match the online application; selecting, from a model library, a parameter tuning model corresponding to the application and the workload type that match the online application; and determining, based on the selected parameter tuning model, an optimal parameter for running the online application.

According to the foregoing technical solution, whether the workload changes when the electronic device runs the online application is detected, when the workload changes, the feature data of the online application is matched with the feature data in the feature library, to determine the optimal parameter tuning model of the online application, and the optimal parameter is output by using the optimal parameter tuning model. This implements dynamic parameter tuning, improves real-time performance of parameter tuning, and ensures normal system running.

In a possible implementation, the detecting whether a workload changes when an electronic device runs an online application includes: collecting key data of the online application, and generating a time series of the key data; detecting whether data distribution before and after any data in the time series changes; and if the data distribution before and after the any data in the time series changes, determining that the workload of the online application changes; or if data distribution before and after all data in the time series does not change.

According to the foregoing technical solution, whether the workload changes when the electronic device runs the online application is detected by using the data distribution in the time series. In this way, time dimension information is considered, a workload change can be actively discovered in real time, sensitivity is higher, and detection precision can be effectively improved.

In a possible implementation, the detecting whether data distribution before and after any data in the time series changes includes: detecting, based on average values and variances of data on left and right sides of the any data in the time series, whether the data distribution before and after the data changes.

According to the foregoing technical solution, whether the data distribution before and after the data changes is detected based on the average values and the variances of the data on the left and right sides of the any data in the time series. In this way, detection precision can be effectively improved.

In a possible implementation, the detecting, based on average values and variances of the data on the left and right sides of the any data in the time series, whether the data distribution before and after the data changes includes: calculating an average value change and a variance change of the corresponding data on the left and right sides of the any data in the time series; determining whether the average value change is greater than a first threshold, whether the variance change is greater than a second threshold, and whether both the average value change and the variance change are greater than a third threshold; and if the average value change is greater than the first threshold, or the variance change is greater than the second threshold, or both the average value change and the variance change are greater than the third threshold, determining that the data distribution before and after the data changes; or if the average value change is less than or equal to the first threshold, the variance change is less than or equal to the second threshold, and both the average value change and the variance change are less than or equal to the third threshold, determining that the data distribution before and after the data does not change.

According to the foregoing technical solution, whether the data distribution before and after the data changes is detected based on the average value change and the variance change of the corresponding data on the left and right sides of the any data in the time series. In this way, detection precision can be effectively improved.

In a possible implementation, the obtaining feature data of the online application includes: collecting key data of the online application, converting the collected key data into the feature data, and preprocessing the feature data, to obtain a statistical feature and a time series feature of the online application.

According to the foregoing technical solution, static running data and dynamic running data of the online application can be combined, to improve accuracy of an application profile.

In a possible implementation, the matching the feature data with feature data in a feature library, and determining an application and a workload type that are in the feature library and that match the online application includes: matching the statistical feature of the online application with a statistical feature of each group of feature data in the feature library, and determining a first similarity value between the statistical feature of the online application and the statistical feature of each group of feature data in the feature library; matching the time series feature of the online application with a time series feature of each group of feature data in the feature library, and determining a second similarity value between the time series feature of the online application and the time series feature of each group of feature data in the feature library; and determining, based on the first similarity value and the second similarity value, the application and the workload type that are in the feature library and that match the online application.

According to the foregoing technical solution, a similarity value between the feature data of the online application and the feature data in the feature library is constructed, to improve matching precision.

In a possible implementation, the determining a first similarity value between the statistical feature of the online application and the statistical feature of each group of feature data in the feature library includes: calculating a sum of squared differences between a statistical feature of each dimension of the online application and a statistical feature of a corresponding dimension of each group of feature data in the feature library, to obtain the first similarity value between the statistical feature of the online application and the statistical feature of each group of feature data in the feature library.

According to the foregoing technical solution, accuracy of determining similarity between the statistical feature of the online application and the statistical feature in the feature library can be improved.

In a possible implementation, the determining a second similarity value between the time series feature of the online application and the time series feature of each group of feature data in the feature library includes: determining the second similarity value between the time series feature of the online application and the time series feature of each group of feature data in the feature library according to a dynamic time warping distance method for time series similarity.

According to the foregoing technical solution, the second similarity value between the time series feature of the online application and the time series feature of each group of feature data in the feature library is determined according to the dynamic time warping distance method for time series similarity. In this way, time translation and scaling can be considered, and accuracy is higher.

In a possible implementation, the determining, based on the first similarity value and the second similarity value, the application and the workload type that are in the feature library and that match the online application includes: calculating a sum of the first similarity value obtained by matching the statistical feature of the online application with the statistical feature of each group of feature data in the feature library and the second similarity value obtained by matching the time series feature of the online application with the time series feature of each group of feature data in the feature library; determining a minimum sum value of the first similarity value and the second similarity value; and determining an application and a workload type that are in the feature library and that are of feature data corresponding to the minimum sum value as the application and the workload type that match the online application.

According to the foregoing technical solution, dynamic feature matching and static feature matching are combined in a feature matching process. In addition, overall distribution and real-time dynamics of the application workload are considered, to improve matching precision.

In a possible implementation, the method further includes: collecting feature data that is of a plurality of applications and that corresponds to different workload types, and constructing the feature library; and training a preset model based on parameter samples that are of the plurality of applications and that correspond to the workload types, to construct a parameter tuning model that is of each application and that corresponds to a workload type, and constructing the model library based on parameter tuning models that are of the plurality of applications and that correspond to the workload types.

According to the foregoing technical solution, the feature data can be obtained in advance in an offline phase, and the tuning model can be trained, to improve online parameter tuning efficiency.

In a possible implementation, the collecting feature data that is of a plurality of applications and that corresponds to different workload types, and constructing the feature library includes: collecting key data that is of the applications and that corresponds to each workload type; converting the collected key data into the feature data of the applications, and preprocessing the feature data of the applications, to obtain a statistical feature and a time series feature of the key data of the applications; and constructing the feature library based on the statistical feature and the time series feature that are of the plurality of applications and that correspond to each workload type.

According to the foregoing technical solution, the feature data of the applications is collected and preprocessed, to improve validity of the feature data, and improve matching precision of the feature data.

In a possible implementation, the key data includes logical layer data and run-time data.

According to the foregoing technical solution, static data and dynamic data are combined, to improve validity of the feature data, and improve matching precision of the feature data.

In a possible implementation, the converting the collected key data into the feature data of the applications, and preprocessing the feature data of the applications, to obtain a statistical feature and a time series feature of the key data of the applications includes: converting the collected logical layer data of the applications into the statistical feature of the applications, and converting the collected run-time data of the applications into the time series feature of the applications; and performing preprocessing, namely, aggregation, noise reduction, normalization, and clustering on the feature data of the applications, to obtain a statistical feature of a first preset dimension and a time series feature of a second preset dimension.

According to the foregoing technical solution, the feature data of the applications is preprocessed, to improve validity of the feature data, and improve matching precision of the feature data.

In a possible implementation, the training a preset model based on parameter samples that are of the plurality of applications and that correspond to the workload types, to construct a parameter tuning model that is of each application and that corresponds to a workload type includes: presetting a parameter sample that is of the application and that corresponds to the workload type, where the parameter sample includes a plurality of parameters and a plurality of pieces of data corresponding to each parameter; selecting a plurality of groups of first parameters from the parameter sample, and determining first performance data corresponding to each group of first parameters; and constructing a pre-trained random forest model based on the plurality of groups of first parameters and the first performance data corresponding to each group of first parameters.

According to the foregoing technical solution, the random forest model is initialized by using the parameters that are of the applications and that correspond to the workload types, to improve model training efficiency.

In a possible implementation, the selecting a plurality of groups of first parameters from the parameter sample, and determining first performance data corresponding to each group of first parameters includes: randomly selecting the plurality of groups of first parameters from the parameter sample, where each group of first parameters includes data corresponding to a plurality of parameters; and the electronic device runs the applications based on each group of first parameters, and after running of the applications is completed, obtains performance data in a running process, to obtain the first performance data corresponding to each group of first parameters.

According to the foregoing technical solution, the electronic device trains the model by using the performance data of the parameters that is actually used to run the application, to improve model training precision.

In a possible implementation, the constructing a pre-trained random forest model based on the plurality of groups of first parameters and the first performance data corresponding to each group of first parameters includes: using each group of first parameters as input data of the random forest model, using the first performance data corresponding to each group of first parameters as output data of the random forest model, and performing parameter tuning on the random forest model based on the input data and the output data, to complete construction of the pre-trained random forest model.

According to the foregoing technical solution, the random forest model is initialized by using the parameters that are of the applications and that correspond to the workload types, to improve model training efficiency.

In a possible implementation, the training a preset model based on parameter samples that are of the plurality of applications and that correspond to the workload types, to construct a parameter tuning model that is of each application and that corresponds to a workload type further includes: selecting a plurality of groups of second parameters from the parameter sample, and inputting the plurality of groups of second parameters into the pre-trained random forest model, to obtain second performance data predicted by each decision tree in the pre-trained random forest model; calculating an average value and a standard deviation of the pre-trained random forest model based on second performance data predicted by all decision trees; calculating a plurality of output values of an acquisition function of a Bayesian optimization algorithm based on the average value and the standard deviation of the pre-trained random forest model; and determining a third parameter based on a largest output value of the acquisition function, and training the pre-trained random forest model based on the third parameter.

According to the foregoing technical solution, parameter tuning is performed by using the random forest-based Bayesian optimization algorithm, to effectively process discrete, continuous, and categorical parameters, improve sample selection effect in a training process, and improve model training efficiency.

In a possible implementation, the selecting a plurality of groups of second parameters from the parameter sample, and inputting the plurality of groups of second parameters into the pre-trained random forest model, to obtain second performance data predicted by each decision tree in the pre-trained random forest model includes: selecting the plurality of groups of second parameters from the parameter sample based on a preset sampling strategy, randomly inputting the plurality of groups of second parameters into a plurality of decision trees in the pre-trained random forest model, and outputting, by using each decision tree, second performance data corresponding to each group of second parameters.

According to the foregoing technical solution, the performance data is predicted by using the pre-trained random forest model, to provide a reference for subsequent sample selection, improve sample selection adaptability, and improve model training efficiency.

In a possible implementation, the preset sampling strategy is selecting, from the parameter sample, a preset quantity of groups of parameters that maximize the acquisition function as a start point, and finding a neighbor point by using a random neighbor method.

According to the foregoing technical solution, model training precision and adaptability can be improved through large-scale sampling.

In a possible implementation, the determining a third parameter based on a largest output value of the acquisition function, and training the pre-trained random forest model based on the third parameter includes: The electronic device runs the application based on the third parameter, obtains third performance data corresponding to the third parameter after running of the applications is completed, and continues to train the pre-trained random forest model based on the third parameter and the third performance data, to complete update of the pre-trained random forest model.

According to the foregoing technical solution, the pre-trained random forest model is updated by using the samples determined by using the Bayesian optimization algorithm, to improve precision of the parameter tuning model.

In a possible implementation, the training a preset model based on parameter samples that are of the plurality of applications and that correspond to the workload types, to construct a parameter tuning model that is of each application and that corresponds to a workload type further includes: determining whether a current quantity of iterations reaches a first quantity of iterations; and if the current quantity of iterations reaches the first quantity of iterations, determining, based on the current pre-trained random forest model, the parameter tuning model that is of the application and that corresponds to the workload type, and outputting, by using the current pre-trained random forest model, an optimal parameter that is in the parameter sample and that optimizes performance data.

According to the foregoing technical solution, the quantity of iterations is set, to ensure effectively training of the parameter tuning model, and the current optimal parameter is accurately output based on the parameter tuning model obtained through training, to improve a tuning speed.

In a possible implementation, the outputting, by using the current pre-trained random forest model, an optimal parameter that is in the parameter sample and that optimizes performance data includes: inputting a plurality of groups of preset parameters in the parameter samples into the current pre-trained random forest model, to obtain performance data respectively corresponding to the plurality of groups of preset parameters; and determining optimal performance data in the performance data respectively corresponding to the plurality of groups of preset parameters, and determining a group of preset parameters corresponding to the optimal performance data as the optimal parameter that is in the parameter sample and that optimizes the performance data.

According to the foregoing technical solution, the parameter tuning model obtained through training outputs the parameter that optimizes the performance data, to improve a tuning speed.

In a possible implementation, the determining, based on the selected parameter tuning model, an optimal parameter for running the online application includes: tuning the selected parameter tuning model based on a parameter sample of the online application; and outputting, based on the tuned parameter tuning model, the optimal parameter for running the online application.

According to the foregoing technical solution, adaptive fine-tuning is performed on the selected parameter tuning model based on the parameter of the current application, to improve applicability of the parameter tuning model to the current application, and improve precision and a speed of parameter tuning.

In a possible implementation, the tuning the selected parameter tuning model based on a parameter sample of the online application includes: training the parameter tuning model based on a plurality of groups of parameters in the parameter sample of the online application, corresponding performance data, and a second quantity of iterations, to complete tuning of the parameter tuning model.

In a possible implementation, adaptive fine-tuning is performed on the selected parameter tuning model based on the parameter of the current application, to improve applicability of the parameter tuning model to the current application, and improve precision and a speed of parameter tuning.

In a possible implementation, the outputting, based on the tuned parameter tuning model, the optimal parameter for running the online application includes: inputting a plurality of groups of parameters of the online application into the tuned parameter tuning model, to obtain performance data respectively corresponding to the plurality of groups of parameters of the online application; and determining optimal performance data in the performance data respectively corresponding to a plurality of groups of parameters of the online application, determining a parameter corresponding to the optimal performance data as the optimal parameter for running the online application by the electronic device, and outputting the optimal parameter.

According to the foregoing technical solution, tuning is performed based on the parameter tuning model obtained through adaptive fine-tuning, to improve a tuning speed, improve precision of an output optimal parameter, ensure system stability of the electronic device, and improve running efficiency.

According to a second aspect, an embodiment of this application provides a computer-readable storage medium, including computer instructions. When the computer instructions are run on an electronic device, the electronic device is enabled to perform the parameter tuning method according to the first aspect.

According to a third aspect, an embodiment of this application provides an electronic device. The electronic device includes a processor and a memory, the memory is configured to store instructions, and the processor is configured to invoke the instructions in the memory, so that the electronic device performs the parameter tuning method according to the first aspect.

According to a fourth aspect, an embodiment of this application provides a computer program product. When the computer program product is run on a computer, the computer is enabled to perform the parameter tuning method according to the first aspect.

According to a fifth aspect, an apparatus is provided. The apparatus has a function of implementing behavior of the electronic device in the method according to the first aspect. The function can be implemented by hardware, or can be implemented by executing corresponding software by hardware. The hardware or software includes one or more modules corresponding to the foregoing functions.

It can be understood that the computer-readable storage medium according to the second aspect, the electronic device according to the third aspect, the computer program product according to the fourth aspect, and the apparatus according to the fifth aspect all correspond to the method in the first aspect. Therefore, for beneficial effects that can be achieved by the computer-readable storage medium, the electronic device, the computer program product, and the apparatus, reference can be made to the beneficial effects in the corresponding method provided above. Details are not described herein again.

## BRIEF DESCRIPTION OF DRAWINGS

FIG. 1 is a diagram of a structure of an electronic device according to an embodiment of this application;

FIG. 2 is a diagram of an application scenario of a parameter tuning method according to an embodiment of this application;

FIG. 3 is a diagram of an architecture of a parameter tuning system according to an embodiment of this application;

FIG. 4 is a schematic flowchart of a method for constructing a feature library and a model library according to an embodiment of this application;

FIG. 5 is a schematic flowchart of collecting feature data that is of a plurality of applications and that corresponds to different workload types, and constructing a feature library according to an embodiment of this application;

FIG. 6 is a schematic flowchart of constructing a parameter tuning model that is of each application and that corresponds to a workload type, and constructing a model library based on parameter tuning models that are of a plurality of applications and that correspond to workload types according to an embodiment of this application;

FIG. 7 is a schematic flowchart of a parameter tuning method according to an embodiment of this application;

FIG. 8 is a schematic flowchart of detecting whether a workload changes when an electronic device runs an online application according to an embodiment of this application;

FIG. 9 is a schematic flowchart of determining an application and a workload type that are in a feature library and that match an online application according to an embodiment of this application;

FIG. 10 is a schematic flowchart of determining, based on a selected parameter tuning model, an optimal parameter for running an online application according to an embodiment of this application;

FIG. 11 is a schematic flowchart of a method for constructing a feature library and a model library according to another embodiment of this application; and

FIG. 12 is a schematic flowchart of a parameter tuning method according to another embodiment of this application.

## DESCRIPTION OF EMBODIMENTS

It should be noted that, in this application, "at least one" means one or more, and "a plurality of" means two or more. The term "and/or" describes an association relationship for describing associated objects and indicates that three relationships can exist. For example, A and/or B can indicate the following cases: Only A exists, both A and B exist, and only B exists, where A and B can be singular or plural. In the specification, claims, and accompanying drawings of this application, the terms such as "first", "second", "third", "fourth", and the like (if existing) are intended to distinguish between similar objects but do not indicate a specific order or sequence.

In addition, in embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. To be precise, use of the terms such as "example" or "for example" is intended to present a relative concept in a specific manner. When no conflict occurs, the following embodiments and the features in the embodiments can be mutually combined.

For ease of understanding, examples of some concepts related to embodiments of this application are described for reference.

Operating system (Operating System, OS): a program that manages computer hardware and software resources, acting as a kernel and a foundation of a computer system.

Process (Process): an execution activity that is of a computer program and that is related to a specific data set, acting as a basic unit for resource allocation and scheduling by a system, and a structural basis of an operating system. A process is a basic execution entity of a program. In a modern thread-oriented computer architecture, a process is a container of a thread. The program is a description of an instruction, data, and an organizational form thereof. The process is a program entity. The process can be considered as an independent program with complete data space and code space in a memory. Data and variables owned by the process belong only to the process itself.

Thread: a minimum unit for performing operations in a process, namely, a basic unit for performing processor scheduling. If the process is understood as a task that an operating system logically completes, the thread indicates one of many possible subtasks that complete the task. In other words, the thread exists in the process. One process includes one or more threads. The threads share same code and global data.

Application profile: intuitively providing objective analysis content of an application system by using an intelligent analysis algorithm based on data collected by a single application.

Intelligent parameter tuning (Parameter tuning, PT): selecting an optimal value for each tunable parameter in an application system by using a machine learning algorithm.

An electronic device can communicate with another electronic device or a server through a communication network. An electronic device to which embodiments of this application are applied can be a communication device, for example, can be a server or a terminal device. The terminal device can include at least one of the following: a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and a smart city device. A specific type of the electronic device is not specially limited in embodiments of this application. The communication network can be a wired network, or a wireless network. For example, the communication network can be a local area network (local area network, LAN), or a wide area network (wide area network, WAN), for example, the Internet. When the communication network is a local area network, for example, the communication network can be a short-range communication network, for example, a wireless fidelity (wireless fidelity, Wi-Fi) hotspot network, a Wi-Fi P2P network, a Bluetooth network, a ZigBee network, or a near field communication (near field communication, NFC) network. When the communication network is a wide area network, the communication network can be, for example, a 3rd generation wireless telephone technology (3rd generation wireless telephone technology, 3G) network, a 4th generation mobile communication technology (4th generation mobile communication technology, 4G) network, a 5th generation mobile communication technology (5th generation mobile communication technology, 5G) network, a future evolved public land mobile network (public land mobile network, PLMN), or the Internet.

In some embodiments, the electronic device can support running of one or more APPs (Applications). The APP can be briefly referred to as an application, and is a software program that can implement one or more specific functions, for example, applications such as an instant messaging application, a video application, an audio application, an image shooting application, and a cloud desktop application. The instant messaging application can include, for example, a messaging application, WeChat® (WeChat®), WhatsApp Messenger®, LINE® (Line®), image sharing (instagram®), KakaoTalk®, and DingTalk®. The image shooting application can include, for example, a camera application (a system camera or a third-party camera application). The video application can include, for example, YouTube®, Twitter®, TikTok®, iQIYI®, and Tencent Video®. The audio application can include, for example, KuGou®, XiaMi Music®, and QQ Music®. An application mentioned in the following embodiments can be a system application installed when the electronic device is delivered from the factory, or can be a third-party application downloaded by a user from a network or obtained by the user from another electronic device during use of the electronic device.

The electronic device includes but is not limited to carrying iOS®, Android® (Android®), Windows Mobile®, HarmonyOS®, or another operating system.

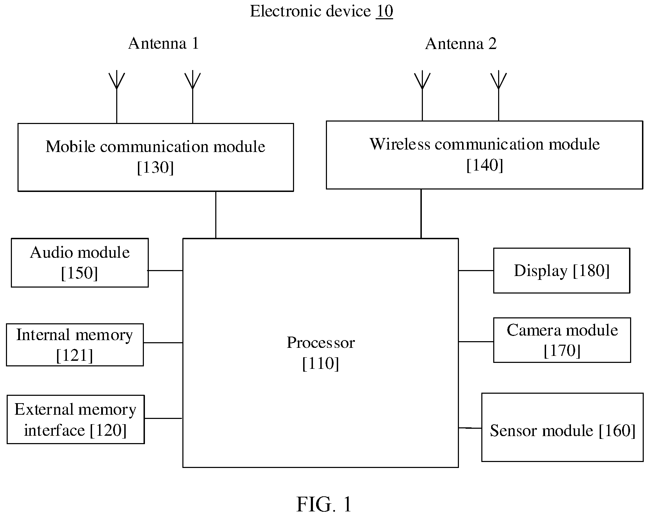

FIG. 1 is a diagram of a structure of an electronic device 10.

The electronic device 10 can include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It can be understood that the structure shown in this embodiment of this application does not constitute a specific limitation on the electronic device 10. In some other embodiments of this application, the electronic device 10 can include more or fewer components than those shown in the figure, or some components can be combined, or some components can be split, or there can be a different component layout. The components shown in the figure can be implemented by hardware, software, or a combination of software and hardware.

The processor 110 can include one or more processing units. For example, the processor 110 can include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units can be independent components, or can be integrated into one or more processors.

The processor can generate an operation control signal based on instruction operation code and a time series signal, to complete control of instruction fetching and instruction execution.

A memory can be further disposed in the processor 110, and is configured to store instructions and data. In some embodiments, the memory in the processor 110 can be a cache. The memory can store instructions or data that has been used or frequently used by the processor 110. If the processor 110 needs to use the instructions or the data, the processor 110 can directly invoke the instructions or the data from the memory, to avoid repeated access and reduce a waiting time of the processor 110. Therefore, system efficiency is improved.

In some embodiments, the processor 110 can include one or more interfaces. The interface can include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 can be connected to a module like an audio module, a wireless communication module, a display, and a camera through at least one of the foregoing interfaces.

It can be understood that an interface connection relationship between modules illustrated in this embodiment of this application is merely an example for description, and does not constitute a limitation on a structure of the electronic device 10. In some other embodiments of this application, the electronic device 10 can alternatively use an interface connection manner different from that in the foregoing embodiment, or a combination of a plurality of interface connection manners.

A wireless communication function of the electronic device 10 can be implemented through the antenna 1, the antenna 2, the mobile communication module 130, the wireless communication module 140, the modem processor, the baseband processor, and the like.

The antenna 1 and the antenna 2 are configured to transmit and receive an electromagnetic wave signal. Each antenna in the electronic device 10 can be configured to cover one or more communication frequency bands. Different antennas can be further multiplexed, to improve antenna utilization. For example, the antenna 1 can be multiplexed as a diversity antenna of a wireless local area network. In some other embodiments, the antenna can be used in combination with a tuning switch.

The mobile communication module 130 can provide a wireless communication solution that includes 2G/3G/4G/5G or the like and that is applied to the electronic device 10. The mobile communication module 130 can include at least one filter, a switch, a power amplifier, a low noise amplifier, and the like. The mobile communication module 130 can receive an electromagnetic wave by using the antenna 1, perform processing such as filtering or amplification on the received electromagnetic wave, and transmit the electromagnetic wave to the modem processor for demodulation. The mobile communication module 130 can further amplify a signal modulated by the modem processor, and convert the signal into an electromagnetic wave for radiation by using the antenna 1. In some embodiments, at least some functional modules of the mobile communication module 130 can be disposed in the processor 110. In some embodiments, at least some functional modules of the mobile communication module 130 can be disposed in a same device as at least some modules of the processor 110.

The modem processor can include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through the audio module, or displays an image or a video through the display 180. In some embodiments, the modem processor can be an independent component. In some other embodiments, the modem processor can be independent of the processor 110, and is disposed in a same device as the mobile communication module 130 or another functional module.

The wireless communication module 140 can provide a wireless communication solution that is applied to the electronic device 10, and that includes a wireless local area network (wireless local area network, WLAN), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), NFC, an infrared (infrared, IR) technology, or the like. The wireless communication module 140 can be one or more components integrating at least one communication processing module. The wireless communication module 140 receives an electromagnetic wave through the antenna 2, performs frequency modulation and filtering processing on an electromagnetic wave signal, and sends a processed signal to the processor 110. The wireless communication module 140 can further receive a to-be-sent signal from the processor 110, perform frequency modulation and amplification on the signal, and convert the signal into an electromagnetic wave for radiation through the antenna 2.

In some embodiments, in the electronic device 10, the antenna 1 and the mobile communication module 130 are coupled, and the antenna 2 and the wireless communication module 140 are coupled, so that the electronic device 10 can communicate with a network and another device by using a wireless communication technology. The wireless communication technology can include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS can include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 10 can implement a display function through the GPU, the display 180, the application processor, and the like. The GPU is a microprocessor for image processing, and is connected to the display 180 and the application processor. The GPU is configured to: perform mathematical and geometric computation, and render an image. The processor 110 can include one or more GPUs, which execute program instructions to generate or change display information.

The sensor module can include a touch sensor, a pressure sensor, a fingerprint sensor, and the like. The camera module 170 includes a camera. The display 180 is configured to display an image, a video, and the like. The display 180 includes a display panel. The display panel can be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 10 can include one or more displays 180.

The electronic device 10 can implement an image shooting function by using the camera module 170, the ISP, the video codec, the GPU, the display 180, the application processor AP, the neural-network processing unit NPU, and the like.

The digital signal processor is configured to process a digital signal, and can further process another digital signal. For example, when the electronic device 10 selects a frequency, the digital signal processor is configured to perform Fourier transform and the like on frequency energy.

The video codec is configured to compress or decompress a digital video. The electronic device 10 can support one or more types of video codecs. In this way, the electronic device 10 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and can further continuously perform self-learning. The NPU can implement applications such as intelligent cognition of the electronic device 10, for example, image recognition, facial recognition, speech recognition, and text understanding.

The external memory interface 120 can be configured to connect to an external memory card, for example, a micro SD card, to extend a storage capability of the electronic device 10. The external memory card communicates with the processor 110 through the external memory interface 120, to implement a data storage function. For example, files such as music and videos are stored in the external storage card, or files such as music and a video are transmitted from the electronic device to the external storage card.

The internal memory 121 can be configured to store computer-executable program code. The executable program code includes instructions. The internal memory 121 can include a program storage area and a data storage area. The program storage area can store an operating system, an application required by at least one function (for example, a voice playing function or an image playing function), and the like. The data storage area can store data (such as audio data and a phone book) and the like that are created during use of the electronic device 10. In addition, the internal memory 121 can include a high-speed random access memory, or can include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods or data processing of the electronic device 10.

The audio module 150 is configured to convert digital audio information into an analog audio signal for output, and is also configured to convert an analog audio input into a digital audio signal. The audio module 150 can be further configured to encode and decode an audio signal. In some embodiments, the audio module 150 can be disposed in the processor 110, or some functional modules of the audio module 150 are disposed in the processor 110.

A software system of the electronic device 10 can use a layered architecture, an event-driven architecture, a microkernel architecture, a micro service architecture, or a cloud architecture.

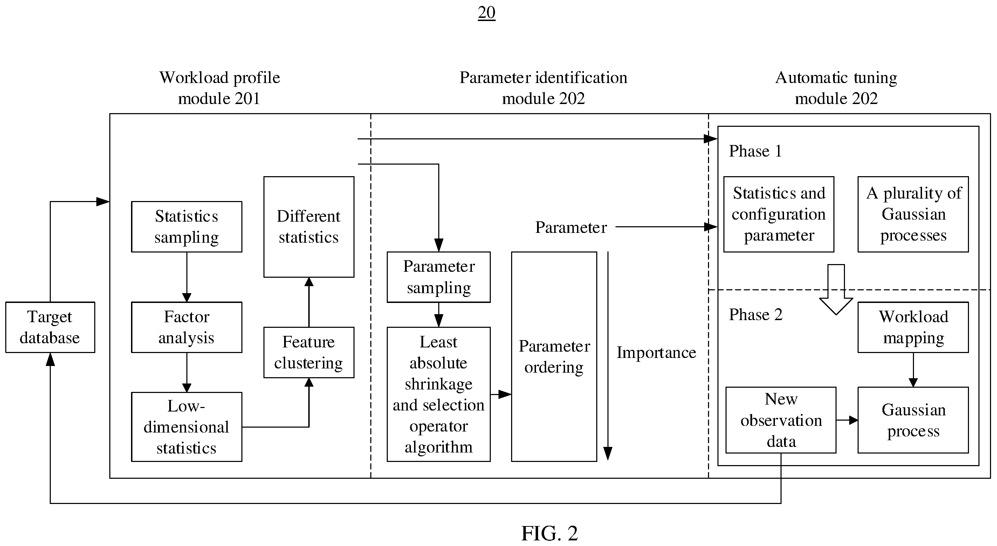

To better understand the parameter tuning method provided in embodiments of this application, the following describes, with reference to FIG. 2, a diagram of an example application scenario of a parameter tuning method provided in embodiments of this application.

There are a large quantity of parameters for an operating system of a server, and they have complex correlation. System running can be controlled based on the parameters. Parameter tuning can improve execution efficiency of an application, reduce resource usage, and reduce system errors, for example, OOM (Out Of Memory, memory overflow), disk exhaustion, and task timeout. Currently, a common parameter tuning tool is usually used for an offline scenario. However, when workload changes (for example, a service is adjusted) after an application goes online, the parameters for the operating system cannot be optimal and need to be re-tuned. For example, in a database scenario, an original scenario is 30% read and 70% write. After a period of time, the scenario changes to 60% read and 40% write. To implement tuning of an online application, whether a workload corresponding to the online application changes needs to be automatically detected, to quickly tune parameters of the online application, to reduce tuning time.

For details of parameter tuning, refer to the following solutions: A database-oriented intelligent parameter tuning solution includes the following key technologies: identifying a workload feature through factor analysis and a clustering algorithm; selecting an important parameter by using a Lasso (Least Absolute Shrinkage and Selection Operator, least absolute shrinkage and selection operator) algorithm; and implementing dynamic parameter tuning by using a Gaussian process regression algorithm. Another database parameter tuning solution can reduce resource usage, and includes the following key technologies: identifying a current workload by analyzing an SQL (Structured Query Language, structured query language) statement feature and using a classification algorithm; using historical experience knowledge through meta-learning; and introducing constrained Bayesian optimization to reduce the resource usage without affecting service performance. Another database parameter tuning solution based on deep reinforcement learning includes the following key technologies: considering continuous state space and action space based on DDPG (Deep Deterministic Policy Gradient, deep deterministic policy gradient) reinforcement learning; and constructing an end-to-end deep learning solution, to consider correlation between parameters.

Compared with conventional manual parameter tuning, the foregoing solutions greatly improve performance. However, the following problems still exist when the solutions are applied to online parameter tuning: These solutions are applicable to only a database scenario (for example, SQL template analysis, and a statistical feature of a database) and lack universality. A statistical information-based application profile does not consider a dynamic feature of an application workload and it is difficult to accurately detect a workload change.

FIG. 2 is a diagram of a system architecture of a database automatic tuning tool OtterTune. An OtterTune system 20 includes a workload profile module 201, a parameter identification module 202, and an automatic tuning module 203. The workload profile module 201 is configured to: sample statistics from target data, where the statistics indicates a database workload, perform factor analysis on the statistics, convert high-dimensional statistics into low-dimensional statistics, perform clustering on the low-dimensional statistics to obtain different statistics, and determine a similar known workload based on a current workload feature, to use the known workload to obtain data collected in advance. The parameter identification module 202 is configured to select an important parameter based on a Lasso algorithm, and determine a dependency relationship between parameters by constructing a higher-order parameter. The automatic tuning module 203 is configured to: match a current workload to a most similar known workload, and train a Gaussian process regression model based on a large amount of data of the most similar known workload and a small amount of data of the current workload, to perform parameter tuning based on the Gaussian process regression model. Although the OtterTune system 20 can implement an offline parameter tuning function based on machine learning, and resolve problems of poor effect and low efficiency of conventional manual experience-based tuning, the foregoing problems still exist when the OtterTune system 20 is applied to online parameter tuning.

To enable a parameter tuning method to be applied to different server scenarios, enhance universality of the parameter tuning method, and monitor a workload change based on a dynamic feature of an application workload, to implement online parameter tuning, an embodiment of this application provides a parameter tuning system.

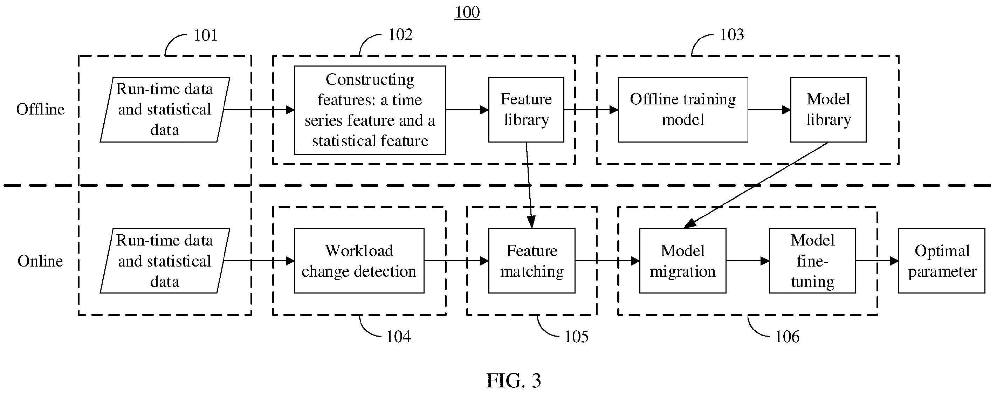

FIG. 3 is a diagram of an architecture of a parameter tuning system according to an embodiment of this application. The parameter tuning system 100 runs in an electronic device 10. The parameter tuning system 100 includes but is not limited to a data collection module 101, a feature library construction module 102, a model library construction module 103, a workload change detection module 104, a feature matching module 105, and a model migration and fine-tuning module 106. In this embodiment of this application, the foregoing modules are programmable software instructions that are stored in an internal memory 121, and can be invoked by a processor 110 for execution. It can be understood that, in another embodiment, the foregoing modules can also be program instructions or firmware that is built into the processor 110.

In an embodiment of this application, data collected by the data collection module 101 relates to common applications and a typical workload type corresponding to each application, and includes logical layer data (a quantity of processes, a quantity of processing requests, and the like) and a run-time feature (running data of a CPU, a memory, a network, a disk, and the like).

The feature library construction module 102 is configured to: remove a redundant feature through clustering and time series similarity calculation, and perform normalization, to obtain a statistical feature of a first preset dimension (for example, 10 dimensions) and a time series feature of a second preset dimension (for example, 36 dimensions).

The model library construction module 103 is configured to obtain, through iterative optimization by using a random forest-based Bayesian optimization algorithm, a tuned model corresponding to each application and a workload type.

The workload change detection module 104 is configured to detect, by using a workload change detection (Workload Change Detection, WCD) algorithm based on a time series feature, whether a workload of the electronic device changes when an online application runs. This detection method has higher sensitivity than a statistics-based detection method.

The feature matching module 105 is configured to perform similarity calculation on feature data of a current application and feature data in the feature library, to obtain a workload type and a pre-trained model that most match a current workload type.

The model migration and fine-tuning module 106 is configured to: migrate the most matched pre-trained model, perform fine-tuning based on the feature data of the current application, and output an optimal configuration parameter.

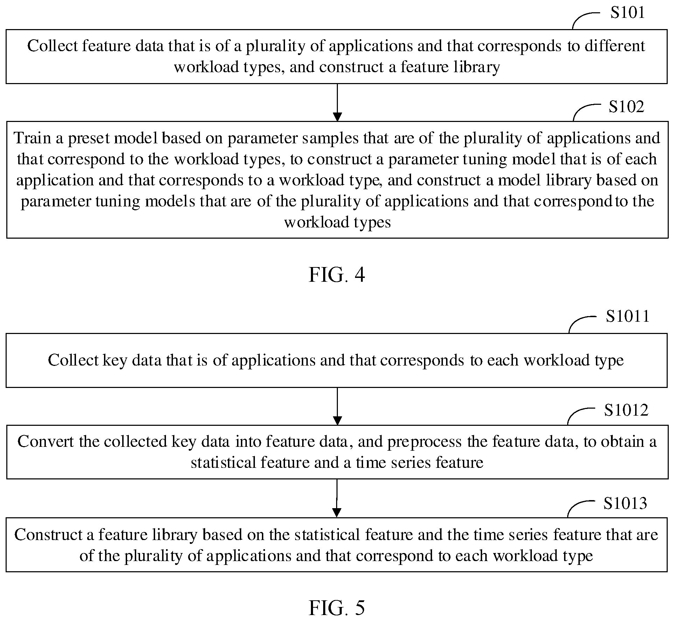

To enable a parameter tuning method to be applied to different server scenarios, enhance universality of the parameter tuning method, and monitor a workload change based on a dynamic feature of an application workload, to implement online parameter tuning, an embodiment of this application provides a parameter tuning method. With reference to FIG. 4, the following describes an example of a schematic flowchart of a method for constructing a feature library and a model library according to an embodiment of this application. The method is applied to an electronic device, and the parameter tuning method includes the following steps.

S101: Collect feature data that is of a plurality of applications and that corresponds to different workload types, and construct a feature library.

In an embodiment of this application, application types and the workload types are known, and the feature data that is of the applications and that corresponds to the different workload types is feature data of the applications running under the different workload types. A detailed procedure of collecting the feature data that is of the plurality of applications and that corresponds to the different workload types, and constructing the feature library is shown in FIG. 5, and specifically includes the following steps.

S1011: Collect key data that is of the applications and that corresponds to each workload type.

In an embodiment of this application, the workload type of the application includes but is not limited to a CPU-intensive type and an I/O-intensive type. The CPU-intensive workload is a workload for executing a task with high CPU utilization, for example, a matrix operation task or a video processing task. The I/O-intensive workload is a workload for executing a task with low CPU utilization and a large quantity of I/O operations, for example, database interaction, file upload and download, and network transmission.

In an embodiment of this application, the collecting key data that is of the applications and that corresponds to each workload type includes: separately collecting key data of the plurality of applications under the CPU-intensive workload and the I/O-intensive workload from another electronic device and/or a database through a data collection interface. The data collection interface is disposed in a system kernel of the electronic device, communicates with the applications and hardware of the electronic device, and collects key data during running of the applications. The electronic device can obtain, by communicating with the another electronic device, key data that is of the applications of the another electronic device and that corresponds to each workload type. The database is used to store historical key data that is of the applications and that corresponds to the different workload types.

In an embodiment of this application, the key data can indicate features of the applications, and key data of an application includes but is not limited to logical layer data and run-time data. The logical layer data and the run-time data are data of the application under a workload type. The logical layer data includes a quantity of processes, a quantity of processing requests, and the like. The run-time data includes data of a CPU, a memory, a network, a disk, and the like, for example, a frequency, power, and utilization of the CPU, utilization, a frequency, and a capacity of the memory, a bandwidth, an uplink rate, and a downlink rate of the network, and a capacity and utilization of the disk.

S1012: Convert the collected key data into the feature data, and preprocess the feature data, to obtain a statistical feature and a time series feature.

In an embodiment of this application, the converting the collected key data into the feature data includes: converting collected logical layer data into the statistical feature, and converting collected run-time data into the time series feature. The statistical feature includes, but is not limited to, an average, a median, a mode, a mean deviation, a variance, a standard deviation, a range, an interquartile range, and a percentage difference. The time series feature includes run-time data corresponding to a plurality of moments. For example, a time series feature of the CPU utilization is indicated as P= {20%, 25%, ..., 62%}. 20% is CPU utilization corresponding to a moment 16:00, 25% is CPU utilization corresponding to a moment 16:05, and 62% is CPU utilization corresponding to a moment 17:00. In an embodiment of this application, the statistical feature has a first preset dimension, and the time series feature has a second preset dimension. Optionally, the first preset dimension is 10, and the second preset dimension is 36.

In an embodiment of this application, the preprocessing the feature data includes: performing aggregation, noise reduction, normalization, and clustering on the feature data.

In an embodiment of this application, the performing aggregation on the feature data includes: aggregating the feature data obtained by converting key data collected from different sources, for example, aggregating feature data obtained by converting key data collected through the data collection interface, key data obtained from the another electronic device, and key data obtained from the database.

In an embodiment of this application, the performing noise reduction on the feature data includes: filtering out abnormal data in the time series feature. Specifically, a normal range of the time series feature of the run-time data is preset, whether each piece of data in the time series feature of the run-time data is within the normal range or is 0 is determined, and if the data in the time series feature of the run-time data is not within the normal range or is 0, the data is deleted. It can be understood that, because an error can occur during generation, collection, or transmission of the run-time data, and consequently, an anomaly occurs in the data, and the data is not within the normal range or is a zero value, the data that is not within the normal range or is the zero value is filtered out, to effectively improve validity of the time series feature.

In an embodiment of this application, the performing normalization on the feature data includes: performing normalization on each piece of data in the time series feature based on a maximum value and a minimum value in the time series feature. Specifically, min (a minimum value)-max (a maximum value) normalization is performed on all data in the time series feature, to normalize each piece of data to a range [-1, 1]. A formula for normalization is:

$$X_i' = 2 \times \frac{X_i - X_{i,\min}}{X_{i,\max} - X_{i,\min}} - 1 \qquad (1)$$

In Formula 1, $X_i$ is a value of an $i^{th}$ time series feature, $X_{i,\min}$ is a minimum value in the time series feature, $X_{i,\max}$ is a maximum value in the time series feature, and $X_i'$ is data obtained after normalization of the $i^{th}$ time series feature.

It can be understood that collected raw data can be redundant. For example, two indicators, namely, CPU usage and CPU utilization describe data of a same physical meaning. In this case, clustering needs to be performed on the feature data. In an embodiment of this application, the performing clustering on the feature data includes: calculating a correlation between any two time series features; determining whether the correlation between the two time series features is greater than or equal to a preset value; and if the correlation between the two time series features is greater than or equal to the preset value, deleting either of the two time series features. It can be understood that clustering and redundancy removal are performed on the time series feature, so that a dimension of the time series feature is the second preset dimension.

In an embodiment of this application, the correlation between the any two time series features can be indicated by using a Pearson correlation coefficient, and a formula for calculating the Pearson correlation coefficient is:

$$COR(X, Y) = \frac{\sum_1^n (X_i - \bar{X}) \sum_1^n (Y_i - \bar{Y})}{\sqrt{\sum_1^n (X_i - \bar{X})^2 \sum_1^n (Y_i - \bar{Y})^2}} \qquad (2)$$

In Formula 2, $X_i$ indicates an $i^{th}$ value of a time series feature $X$, $Y_i$ indicates an $i^{th}$ value of the other time series feature $Y$, $n$ indicates a quantity of pieces of data of the time series features, $\bar{X}$ indicates an average value of the time series feature $X$, and $\bar{Y}$ indicates an average value of the time series feature Y.

S 10 13: Construct the feature library based on the statistical feature and the time series feature that are of the plurality of applications and that correspond to each workload type.

In an embodiment of this application, the constructing the feature library based on the statistical feature and the time series feature that are of the plurality of applications and that correspond to each workload type includes: using, as a group of feature data, a statistical feature and a time series feature that are obtained by processing key data that is of each of the plurality of applications, that corresponds to the workload type, and that is collected each time; and storing a plurality of groups of feature data that are of the plurality of applications and that correspond to each workload type in a preset database, to construct the feature library and form profiles of the plurality of applications. The feature library includes a plurality of groups of feature data that are of each of the plurality of applications and that correspond to each workload type (application-workload), for example, a plurality of groups of feature data corresponding to application A-CPU intensive type, a plurality of groups of feature data corresponding to application A-I/O intensive type, a plurality of groups of feature data corresponding to application B-CPU intensive type, and a plurality of groups of feature data corresponding to application B-I/O intensive type.

S102: Train a preset model based on parameter samples that are of the plurality of applications and that correspond to the workload types, to construct a parameter tuning model that is of each application and that corresponds to a workload type, and construct a model library based on parameter tuning models that are of the plurality of applications and that correspond to the workload types.

In an embodiment of this application, the preset model is a random forest-based Bayesian optimization algorithm. In the random forest-based Bayesian optimization algorithm, a random forest model is a surrogate model of a Bayesian optimization algorithm. In another embodiment of this application, the preset model can alternatively be a Bayesian optimization algorithm based on Gaussian process (Gaussian Process, GP) regression or a Bayesian optimization algorithm based on a tree-structured Parzen estimator (Tree-structured Parzen Estimator, TPE).

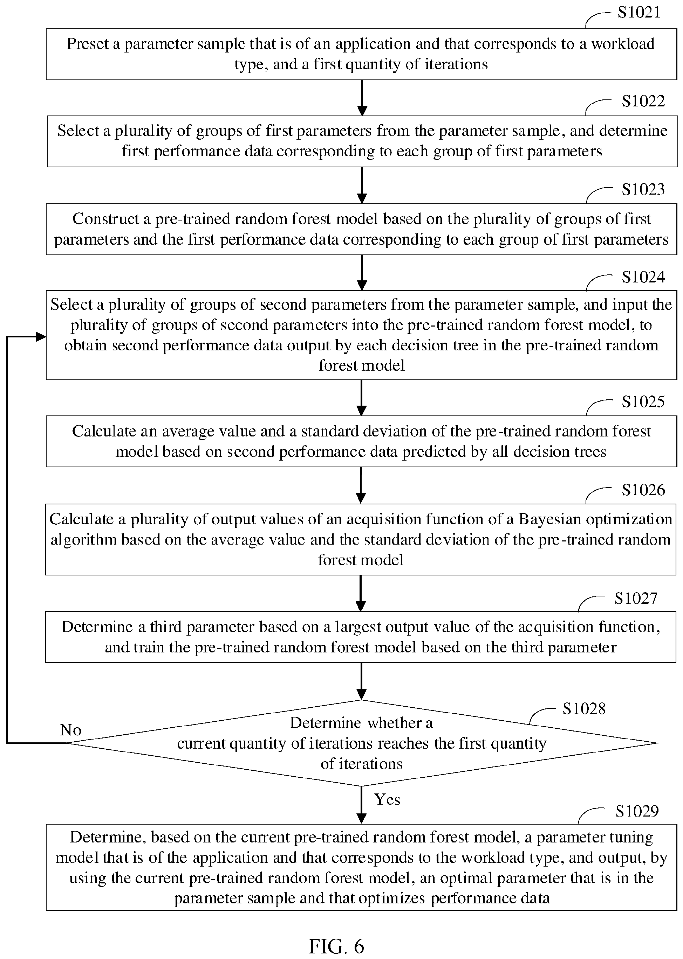

In an embodiment of this application, a detailed procedure of training the preset model based on the parameter samples that are of the plurality of applications and that correspond to the workload types, to construct the parameter tuning model that is of each application and that corresponds to the workload type is shown in FIG. 6, and specifically includes the following steps.

S1021: Preset a parameter sample that is of the application and that corresponds to the workload type, and a first quantity of iterations.

In an embodiment of this application, a parameter sample that is of each application and that corresponds to the workload type is preset, where the parameter sample includes a plurality of parameters and a plurality of pieces of data corresponding to each parameter, to form parameter space that is of each application and that corresponds to the workload type. For example, the application A-CPU intensive type corresponds to two parameters, each parameter has five pieces of data, and the two parameters can include a memory capacity and a maximum quantity of concurrent threads. Five pieces of data of the memory capacity can include 1G, 2G, 3G, 4G, and 5G, and five pieces of data of the maximum quantity of concurrent threads can include 60000, 70000, 8000, 90000, and 100000.

S1022: Select a plurality of groups of first parameters from the parameter sample that is of the application and that corresponds to the workload type, and determine first performance data corresponding to each group of first parameters.

In an embodiment of this application, the plurality of groups of first parameters are randomly selected from the parameter sample that is of the application and that corresponds to the workload type. Each group of first parameters includes data corresponding to a plurality of parameters, for example, data of a memory capacity and data of a maximum quantity of concurrent threads. The electronic device runs the application (namely, a workload) based on each group of first parameters. After running of the application is completed, performance data in a running process is obtained, to obtain the first performance data corresponding to each group of first parameters. In an embodiment of this application, the performance data can be queries per second (Queries Per Second, QPS), response time (Response Time, RT), or system throughput. The queries per second is a quantity of query requests processed by a system per second. The response time is time for the system to respond to the request. The system throughput is a quantity of requests processed per unit time.

S1023: Construct a pre-trained random forest model based on the plurality of groups of first parameters and the first performance data corresponding to each group of first parameters.

In an embodiment of this application, a random forest model is first initialized, and the random forest model is trained by using the plurality of groups of first parameters and the first performance data corresponding to each group of first parameters as training data. The constructing a pre-trained random forest model based on the plurality of groups of first parameters and the first performance data corresponding to each group of first parameters includes: using the plurality of groups of first parameters as input data of the random forest model, using first performance data corresponding to the plurality of groups of first parameters as output data of the random forest model, and performing parameter tuning on the random forest model based on the input data and the output data, to complete construction of the pre-trained random forest model.

Specifically, the random forest model includes a plurality of sub-models, and the sub-model can be a decision tree. The plurality of groups of first parameters are randomly input into each sub-model, the first performance data corresponding to the groups of first parameters is used as the output data of the random forest model, and model parameters of the random forest model are tuned, to construct the pre-trained random forest model. Optionally, the model parameter of the random forest model includes a quantity of decision trees, a maximum quantity of features of the decision tree, a maximum depth of the decision tree, and a maximum quantity of leaf nodes of the decision tree.

S1024: Select a plurality of groups of second parameters from the parameter sample that is of the application and that corresponds to the workload type, and input the plurality of groups of second parameters into the pre-trained random forest model, to obtain second performance data predicted by each decision tree in the pre-trained random forest model.

In an embodiment of this application, the plurality of groups of second parameters are selected, based on a preset sampling strategy, from the parameter sample that is of the application and that corresponds to the workload type, the plurality of groups of second parameters are separately and randomly input into a plurality of decision trees in the pre-trained random forest model, and second performance data corresponding to each group of second parameters is output by using each decision tree. The second performance data is performance data predicted by the decision tree based on each group of second parameters.

In an embodiment of this application, the preset sampling strategy is selecting, from the parameter sample, a preset quantity of groups of parameters that maximize an acquisition function (acquisition function) of a Bayesian optimization algorithm as a start point, finding a neighbor point (namely, an adjacent parameter combination) by using a random neighbor (random neighbor) method, and inputting the neighbor point into the random forest model for prediction. Optionally, the preset quantity is 10. A definition of a random neighbor of a specific point is as follows: Values of all discrete variables of the point are randomly switched. For example, all continuous variables of the point are switched by using a current value as an average value, and using preset data as standard deviation-based sampling (the continuous variables are normalized to [0, 1] in advance). Optionally, the preset data is 0.2. In this method, a plurality of groups of parameters are randomly sampled and input into the pre-trained random forest model to obtain an average value and a standard deviation of prediction data. Then, an acquisition function is calculated, and a parameter that maximizes the acquisition function is selected as a parameter of a next iteration.

S1025: Calculate an average value and a standard deviation of the pre-trained random forest model based on second performance data predicted by all decision trees.

In an embodiment of this application, an average value of the second performance data predicted by all the decision trees is calculated and used as the average value of the pre-trained random forest model; and a standard deviation of the second performance data predicted by all the decision trees is calculated and used as the standard deviation of the pre-trained random forest model. If the quantity of decision trees is n, second performance data predicted by a decision tree 1 is $a_1$, second performance data predicted by a decision tree 2 is $a_2$, ..., and second performance data predicted by a decision tree n is $a_n$, a formula for calculating the average value $\mu$ of the pre-trained random forest model is:

$$\mu = \frac{a_1 + a_2 + \cdots + a_n}{n} \quad (3)$$

A formula for calculating the standard deviation $\sigma$ of the pre-trained random forest model is:

$$\sigma = \sqrt{\frac{(a_1 - \mu)^2 + (a_2 - \mu)^2 + \cdots + (a_n - \mu)^2}{n}} \quad (4)$$

S1026: Calculate a plurality of output values of an acquisition function of a Bayesian optimization algorithm based on the average value and the standard deviation of the pre-trained random forest model.

In an embodiment of this application, the acquisition function is an EI (Expected improvement, expected improvement) function, and an expression of the EI function is determined based on an objective of obtaining performance data through parameter tuning. If the objective of obtaining the performance data through parameter tuning is obtaining a minimum value of the performance data, the expression of the EI function is:

$$\text{EI}(\text{x}) = (f^* - \mu)\Phi\left(\frac{f^* - \mu}{\sigma}\right) + \sigma\emptyset\left(\frac{f^* - \mu}{\sigma}\right) \quad (5)$$

If the objective of obtaining the performance data through parameter tuning is obtaining a maximum value of the performance data, the expression of the EI function is:

$$\text{EI}(\text{x}) = (\mu - f^*)\Phi\left(\frac{\mu - f^*}{\sigma}\right) + \sigma\emptyset\left(\frac{\mu - f^*}{\sigma}\right) \quad (6)$$

In Formulas 5 and 6, $\mu$ is an average value, $\sigma$ is a standard deviation, $\Phi$ is a probability density function of normal distribution, $\varnothing$ is a distribution function of normal distribution, and f* is an output value of a current optimal parameter combination, that is, in Formula 5, f* is a current minimum value, and in Formula 6, f* is a current maximum value.

For example, if the performance data is the response time, and smaller response time is obviously better, the objective of obtaining the performance data through parameter tuning is obtaining a minimum value of the performance data, and a corresponding EI function is Formula 5. If the performance data is the system throughput, and larger system throughput is obviously better, the objective of obtaining the performance data through parameter tuning is obtaining a maximum value of the performance data, and a corresponding EI function is Formula 6.

In another embodiment of this application, the acquisition function of the Bayesian optimization algorithm can alternatively be a probability of improvement (Probability of Improvement, PI), or an upper confidence bound (Upper Confidence Bound, UCB).

In an embodiment of this application, average values value and standard deviations that are of the pre-trained random forest model and that correspond to the plurality of groups of second parameters are input into the sampling function, to obtain a plurality of output values of the acquisition function.

S1027: Determine a third parameter based on a largest output value of the acquisition function, and train the pre-trained random forest model based on the third parameter.

In an embodiment of this application, after the average values and the standard deviations that correspond to the plurality of groups of second parameters are input into the acquisition function, the plurality of output values are obtained, a maximum value of the plurality of output values is determined, and a group of second parameters corresponding to the largest output value is used as a third parameter. The electronic device runs the workload based on the third parameter, obtains third performance data corresponding to the third parameter after running of the workload is completed, and continues to train the pre-trained random forest model based on the third parameter and the third performance data, to complete update of the pre-trained random forest model. It can be understood that the parameter corresponding to the largest output value of the acquisition function is a sample with a maximum benefit. This can improve model training efficiency.

S1028: Determine whether a current quantity of iterations reaches a first quantity of iterations. If the current quantity of iterations reaches (that is, is equal to) the first quantity of iterations, the procedure proceeds to S1029. If the current quantity of iterations does not reach (that is, is less than) the first quantity of iterations, the procedure returns to S1024. Optionally, the first quantity of iterations is 1000.

S1029: Determine, based on the current pre-trained random forest model, the parameter tuning model that is of the application and that corresponds to the workload type, and output, by using the current pre-trained random forest model, an optimal parameter that is in the parameter sample and that optimizes performance data.

In an embodiment of this application, the determining, based on the current pre-trained random forest model, the parameter tuning model that is of the application and that corresponds to the workload type includes: when the current quantity of iterations reaches the first quantity of iterations, determining the Bayesian optimization algorithm based on the current pre-trained random forest model as the parameter tuning model that is of the application and that corresponds to the workload type.

In an embodiment of this application, the outputting, by using the current pre-trained random forest model, an optimal parameter that is in the parameter sample and that optimizes performance data includes: inputting a plurality of groups of preset parameters in the parameter samples into the current pre-trained random forest model, to obtain performance data respectively corresponding to the plurality of groups of preset parameters; and determining optimal performance data in the performance data respectively corresponding to the plurality of groups of preset parameters, and determining a group of preset parameters corresponding to the optimal performance data as optimal parameter that is in the parameter sample and that optimizes the performance data. The plurality of groups of preset parameters can be all or some of parameter combinations in the parameter samples. Specifically, a group of preset parameters corresponding to the maximum value or the minimum value of the performance data is determined as the optimal parameters based on the objective of obtaining the performance data through parameter tuning. For example, if the performance data is the response time, and the optimal performance data is the minimum value of the performance data, the group of preset parameters corresponding to the minimum value of the performance data is the optimal parameters. If the performance data is the system throughput, and the optimal performance data is the maximum value of the performance data, the group of preset parameters corresponding to the maximum value of the performance data is the optimal parameters.

S1030: Construct, based on S1021 to S1029, the parameter tuning model that is of each application and that corresponds to the workload type, and store the parameter tuning model that is of each application and that corresponds to the workload type in the preset database, to obtain the model library of the parameter tuning models that are of the plurality of applications and that correspond to the workload types.

In S102, for each type of application workload, the model is iteratively trained, based on given tunable parameters and search space, by obtaining a tuning objective indicator given by a user and using an intelligent algorithm, to obtain a model library constructed for all application workloads. The search space is space constructed by using a plurality of parameters and corresponding values.

Specifically, one model is trained for each type of application workload, to finally construct a complete model library. The user needs to specify the tunable parameters and the search space, define a tuning objective, and train the model by using an iteration algorithm. In each iteration, a tuner initiates a tuning request, and a target machine runs a workload. The target machine sends, to the tuner based on current parameters, target machine performance of tuning that is obtained after execution is completed. The tuner outputs values of all parameters for a next iteration based on current and historical parameter values, until the model converges and is stored in the model library. An existing tuner usually uses the Bayesian regression algorithm, but there are the following two problems. Because a quantity of parameters is large, a search space dimension is high, and a tuning speed of a conventional algorithm (for example, the Gaussian process regression model) is slow. In addition, parameter types of different applications include a discrete parameter, a continuous parameter, and a categorical parameter, and the conventional algorithm is not universal. Based on this, the random forest algorithm is introduced to process discrete, continuous, and categorical parameters based on the conventional Bayesian regression algorithm; and the sampling strategy is introduced to improve a processing capability of the model in high-dimensional space.

In an embodiment of this application, S101 and S102 are an offline training phase, including constructing the feature library and the model library that are of the applications and that corresponds to the workload types.

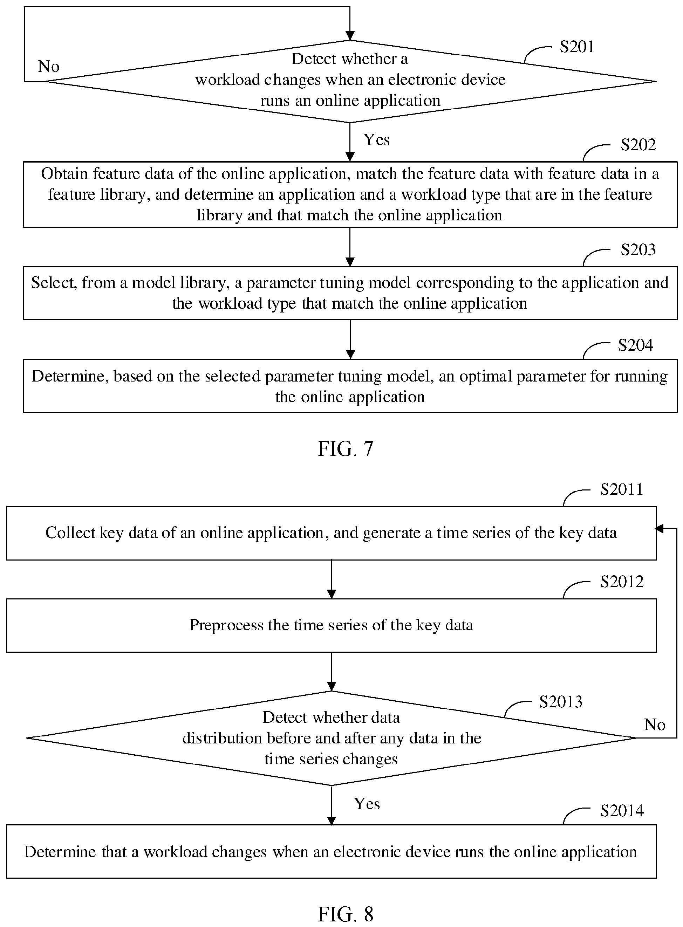

FIG. 7 is a schematic flowchart of a parameter tuning method according to an embodiment of this application. The method is applied to an electronic device, and the parameter tuning method includes the following steps.

S201: Detect whether a workload changes when the electronic device runs an online application. If the workload changes when the electronic device runs the online application, the procedure proceeds to S202; or if the workload does not change when the electronic device runs the online application, the procedure continues to S201.

In an embodiment of this application, the online application is an application that is running on the electronic device, and can be a cloud application, namely, an application that is installed on a terminal device of the user but is actually run by the electronic device (a server), for example, an applet.

In an embodiment of this application, whether the workload changes when the electronic device runs the online application can be detected based on a distributed change point detection (Change Point Detection, CPD) algorithm. A detailed procedure of detecting whether the workload changes when the electronic device runs the online application is shown in FIG. 8, and specifically includes the following steps.

S2011: Collect key data of the online application, and generate a time series of the key data.

In an embodiment of this application, the key data can be run-time data. A plurality of pieces of collected run-time data are associated with collection moments, to generate a time series of the plurality of pieces of run-time data.

S2012: Preprocess the time series of the key data.

In an embodiment of this application, the preprocessing the time series of the key data includes: performing noise reduction, smoothing, and differential processing on the time series of the key data.

Specifically, the performing noise reduction on the time series of the key data includes filtering out a value beyond a normal range and a zero value in the time series; the performing smoothing on the time series of the key data includes performing smoothing on the time series by using a moving average filter; and the performing differential processing on the time series of the key data includes modifying each value of the time series to a difference between the value and a previous value.

S2013: Detect whether data distribution before and after any data in the time series changes.

In an embodiment of this application, the detecting whether data distribution before and after any data in the time series changes includes: detecting, based on average values and variances of data on left and right sides of the any data, whether the data distribution before and after the data changes.

It can be understood that data on a left side can be data before the any data in the time series, and data on a right side can be data after the any data in the time series. It should be noted that the any data belongs to the data on the left side. For example, the preprocessed time series is indicated as $T=\{x_1, x_2, ..., x_k, x_{k+1}, x_{k+2}, ..., x_n\}$. For the data $x_k$, an average value of the data on the left side is:

$$\mu_l = \frac{1}{k}\sum_{i=1}^{k} x_i \qquad (7)$$

An average value of the data on the right side is:

$$\mu_r = \frac{1}{n-k}\sum_{i=k+1}^{n} x_i \qquad (8)$$

A variance of the data on the left side is:

$$\sigma_l^2 = \frac{1}{k-1} \sum_{i=1}^{k} (x_i - \mu_l)^2 \qquad (9)$$

A variance of the data on the right side is:

$$\sigma_r^2 = \frac{1}{n-k-1} \sum_{i=k+1}^{n} (x_i - \mu_r)^2 \qquad (10)$$

In an embodiment of this application, the detecting, based on average values and variances of data on left and right sides, whether the data distribution before and after the any data in the time series changes includes: calculating an average value change and a variance change of the corresponding data on the left and right sides of the any data in the time series; and determining whether the average value change is greater than a first threshold, whether the variance change is greater than a second threshold, and whether both the average value change and the variance change are greater than a third threshold. If the average value change is greater than the first threshold, or the variance change is greater than the second threshold, or both the average value change and the variance change are greater than the third threshold, it is determined that the data distribution before and after the data changes, and the procedure proceeds to S2014. If the average value change is less than or equal to the first threshold, the variance change is less than or equal to the second threshold, and both the average value change and the variance change are less than or equal to the third threshold, it is determined that the data distribution before and after the data does not change, and the procedure returns to S2011. Optionally, the first threshold is 50%, the second threshold is 50%, and the third threshold is 30%.

In an embodiment of this application, a formula for calculating the average value change $\Delta\mu$ of the data on the left and right sides corresponding to the any data is:

$$\Delta\mu = \frac{|\mu_l - \mu_r|}{\mu_l} \qquad (11)$$

A formula for calculating the variance change $\Delta\sigma^2$ of the data on the left and right sides corresponding to the any data is:

$$\Delta\sigma^2 = \frac{|\sigma_l^2 - \sigma_r^2|}{\sigma_l^2} \qquad (12)$$

S2014: Determine that the workload changes when the electronic device runs the online application.

S202: Obtain feature data of the online application, match the obtained feature data with feature data in a feature library, and determine an application and a workload type that are in the feature library and that match the online application.

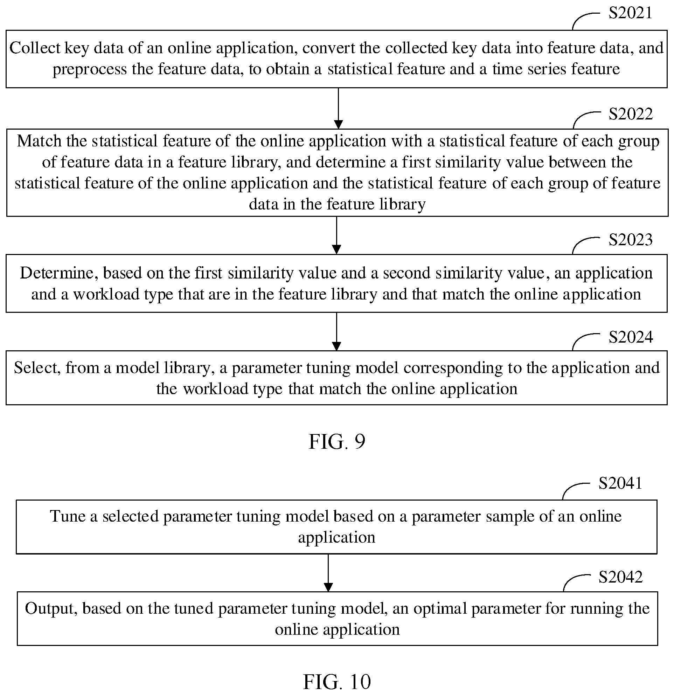

In an embodiment of this application, a detailed procedure of obtaining the feature data of the online application, matching the obtained feature data with the feature data in the feature library, and determining the application and the workload type that are in the feature library and that match the online application is shown in FIG. 9, and specifically includes the following steps.

S2021: Collect key data of the online application, convert the collected key data into the feature data, and preprocess the feature data, to obtain a statistical feature and a time series feature.

In an embodiment of this application, the collected key data of the online application includes logical layer data and run-time data. Same as S1012, the collected key data is converted into the feature data, and the feature data is preprocessed, to obtain the statistical feature of the first preset dimension and the time series feature of the second preset dimension.

S2022: Match the statistical feature of the online application with a statistical feature of each group of feature data in the feature library, and determine a first similarity value between the statistical feature of the online application and the statistical feature of each group of feature data in the feature library.

It can be understood that the statistical feature is a static feature, and the time series feature is a dynamic feature. Dynamic feature matching and static feature matching are combined in a feature matching process. In this way, overall distribution and real-time dynamics of the application workload are considered.

In an embodiment of this application, the determining a first similarity value between the statistical feature of the online application and the statistical feature of each group of feature data in the feature library includes: calculating a sum of squared differences between a statistical feature of each dimension of the online application and a statistical feature of a corresponding dimension of each group of feature data in the feature library, to obtain the first similarity value between the statistical feature of the online application and the statistical feature of each group of feature data in the feature library. A formula for calculating the first similarity value between the statistical feature of the online application and the statistical feature of each group of feature data in the feature library is:

$$D = \sum_{i=1}^{n}(\alpha_i - \beta_i)^2 \qquad (13)$$

In Formula 13, n indicates a dimension of a static feature, $\alpha_i$ and $\beta_i$ respectively indicate an $i^{th}$ feature in currently obtained statistical feature and a statistical feature in a feature library. A smaller value of D indicates a higher similarity between the features.

S2023: Match the time series feature of the online application with a time series feature of each group of feature data in the feature library, and determine a second similarity value between the time series feature of the online application and the time series feature of each group of feature data in the feature library.

In an embodiment of this application, a similarity between dynamic features (the time series features) is determined according to a DTW (Dynamic time warping, dynamic time warping) distance method for time series similarity. In this case, a formula for calculating the second similarity value between the time series feature of the online application and the time series feature of each group of feature data in the feature library is a state transition equation of a DTW distance, and is specifically:

$$dp(i,j) = \min\big(dp(i-1,j-1), dp(i-1,j), dp(i,j-1)\big) + d(i,j) \qquad (14)$$

In Formula 14, $d(i,j)$ indicates a Euclidean distance between $p_i$ and $q_j$, namely, a Euclidean distance between one piece of data in the time series feature of the online application and one piece of data in one time series feature in the feature library, and $dp(i,j)$ indicates a minimum distance between a sequence P={$p_1, p_2, \ldots, p_i$} and a sequence Q={$q_1, q_2, \ldots, q_j$}. It can be understood that, compared with the conventional Euclidean distance, the DTW distance can consider time translation and scaling in similarity calculation, and accuracy is higher. A quantity of data of each time series feature of the online application can be the same as a quantity of data of the time series feature of each group of feature data in the feature library.

S2024: Determine, based on the first similarity value and the second similarity value, the application and the workload type that are in the feature library and that match the online application.

In an embodiment of this application, the determining, based on the first similarity value and the second similarity value, the application and the workload type that are in the feature library and that match the online application includes: calculating a sum of the first similarity value obtained by matching the statistical feature of the online application with the statistical feature of each group of feature data in the feature library and the second similarity value obtained by matching the time series feature of the online application with the time series feature of each group of feature data in the feature library; determining a minimum sum value of the first similarity value and the second similarity value; and determining an application and a workload type that are in the feature library and that are of feature data corresponding to the minimum sum value as the application and the workload type that match the online application.

It can be understood that, the sum of the first similarity value obtained by matching the statistical feature of the online application with the statistical feature of each group of feature data in the feature library and the second similarity value obtained by matching the time series feature of the online application with the time series feature of each group of feature data in the feature library is calculated, to obtain a plurality of sum values of a plurality of first similarity values and a plurality of second similarity values, and a minimum sum value in the plurality of sum values is determined. Further, a group of feature data corresponding to the minimum sum value in the feature library is determined, an application and a workload type that correspond to the group of feature data, namely, the application and the workload type that match the online application, are determined.

It can be understood that, the feature data of the online application is matched with the feature data in the feature library, to determine the application and the workload type that match the online application, a parameter tuning model is further selected based on the matched application and workload type, to obtain the parameter tuning model that most matches the online application, and an optimal parameter for running the online application by the electronic device can be accurately determined by using the parameter tuning model.

In another embodiment of this application, the determining, based on the first similarity value and the second similarity value, the application and the workload type that are in the feature library and that match the online application includes: calculating average values of the first similarity value obtained by matching the statistical feature of the online application with the statistical feature of each group of feature data in the feature library and the second similarity value obtained by matching the time series feature of the online application with the time series feature of each group of feature data in the feature library; determining a minimum average value of the first similarity value and the second similarity value; and determining an application and a workload type that are in the feature library and that are of feature data corresponding to the minimum average value as the application and the workload type that match the online application.

S203: Select, from a model library, a parameter tuning model corresponding to the application and the workload type that match the online application.

In an embodiment of this application, the model library includes a parameter tuning model corresponding to each application and a workload type. After the application and the workload type that match the online application are determined, the parameter tuning model corresponding to the application and the workload type is selected from the model library.

It can be understood that, if a type of the online application and a corresponding workload type are unknown, the feature data of the online application is matched with the feature data in the feature library, to determine the known application and workload type that match the online application without knowing the type of the online application and the corresponding workload type.

In another embodiment of this application, if the type of the online application is known, the feature data of the online application can be matched with feature data that is of the same application as the online application, that is in the feature library, and that corresponds to different workload types, to determine the application and workload type that match the online application. This can effectively shorten matching time of the feature data.

In another embodiment of this application, if the type of the online application and the corresponding workload type are known, the parameter tuning model corresponding to the application and the workload type can be directly selected from the model library.

S204: Determine, based on the selected parameter tuning model, an optimal parameter for running the online application.

In an embodiment of this application, a detailed procedure of determining, based on the selected parameter tuning model, an optimal parameter for running the online application is shown in FIG. 10, and specifically includes the following steps.

S2041: Tune the selected parameter tuning model based on a parameter sample of the online application.

In an embodiment of this application, the parameter sample of the online application includes a plurality of groups of parameters and performance data corresponding to each group of parameters. The parameter tuning model is trained based on the plurality of groups of parameters, the corresponding performance data, and a second quantity of iterations, where a training process is the same as that in S202, to fine-tune the selected parameter tuning model. The second quantity of iterations is less than a first quantity of iterations. Optionally, the second quantity of iterations is 10. The parameter sample of the online application can be preset or collected on site.

S2042: Output, based on the tuned parameter tuning model, the optimal parameter for running the online application.

In an embodiment of this application, the outputting, based on the tuned parameter tuning model, the optimal parameter for running the online application includes: inputting the plurality of groups of parameters of the online application into the tuned parameter tuning model, to obtain a plurality of pieces of performance data; determining optimal performance data in the plurality of pieces of performance data; determining a parameter corresponding to the optimal performance data as the optimal parameter for running the online application by the electronic device; and outputting the optimal parameter. When the electronic device runs the online application by using the optimal parameter obtained based on online parameter tuning, performance can be optimal. Specifically, a group of preset parameters corresponding to the maximum value or the minimum value of the performance data is determined as the optimal parameters based on the objective of obtaining the performance data through parameter tuning.

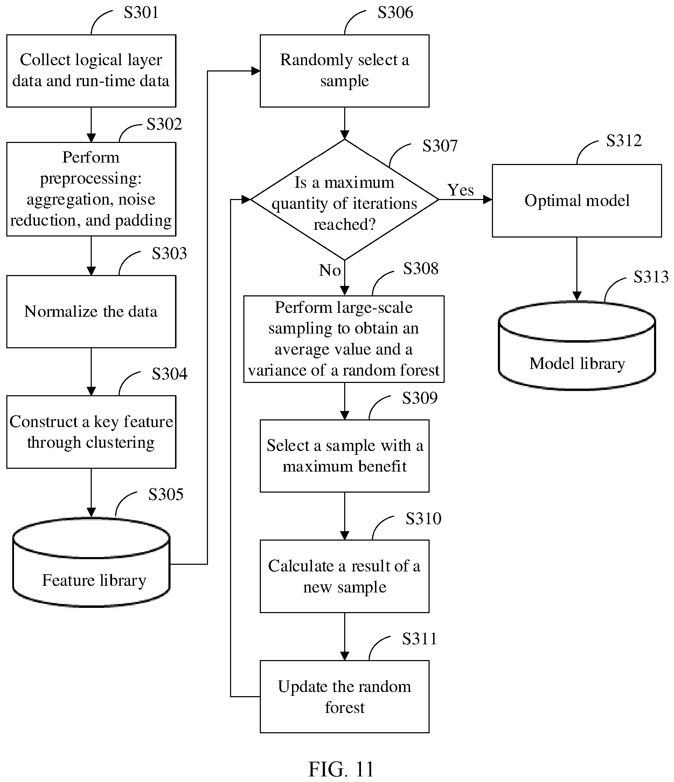

FIG. 11 is a flowchart of a method for constructing a feature library and a model library according to another embodiment of this application. The method is applied to an electronic device, and the parameter tuning method includes the following steps.

S301: Collect logical layer data and run-time data.

In an embodiment of this application, in an offline training phase, to accurately construct an application profile, an existing data collection tool is used to collect key data that can indicate a feature of an application. The data includes logical layer data (such as a quantity of processes and a quantity of processing requests) and run-time data (running data of a CPU, a memory, a network, a disk, and the like). The logical layer data focuses on some statistical information of the application, and the run-time data describes a dynamic feature of the application that changes with time.

S302: Perform data preprocessing, including aggregation, noise reduction, and padding.

In an embodiment of this application, the collected run-time data is indicated as a time series, anomaly detection and removal are performed on the time series, to remove an invalid value (like a value beyond a normal range and a zero value).

S303: Normalize the data.

In an embodiment of this application, min-max normalization is performed on all values in all time series, to normalize each processed value to a range [-1, 1].

S304: Construct a key feature through clustering.

In an embodiment of this application, originally obtained data can be redundant. For example, two indicators, namely, CPU usage and CPU usage percentage, describe data of a same physical meaning. Compared with conventional manual analysis, this method uses time series similarity calculation based on a Pearson correlation coefficient to remove redundant data, to construct a 10-dimensional statistical feature and a 36-dimensional time series feature.

S305: Construct the feature library.

In an embodiment of this application, a feature having a representation capability needs to be constructed for each type of application workload. A complete feature library is constructed for all application workloads.

S306: Randomly select a sample, and train a random forest model based on the randomly selected sample.

S307: Determine whether a current quantity of iterations exceeds a maximum quantity of iterations. If the current quantity of iterations does not exceed the maximum quantity of iterations, the procedure proceeds to S308. If the current quantity of iterations exceeds the maximum quantity of iterations, the procedure proceeds to S312.

S308: Perform large-scale sampling to obtain an average value and a variance of the random forest.

In an embodiment of this application, large-scale sampling is performed on parameters, the parameters obtained through sampling are input into the random forest model, to obtain an output value of each submodel (a decision tree), and an average value and a variance of output values of a plurality of submodels are calculated, to obtain the average value and the variance of the random forest.

S309: Select a sample with a maximum benefit.

In an embodiment of this application, an average value and a variance of the random forest model are input into a sampling function of the Bayesian optimization algorithm, to obtain an output value of the sampling function, and a sample corresponding to a largest output value of the sampling function is determined as the sample with the maximum benefit.

S310: Calculate a result of a new sample.

S311: Update the random forest model based on a structure of the new sample.

S312: Construct an optimal parameter tuning model based on an updated random forest model.

S313: Construct a model library based on the optimal model.

A specific working procedure of a tuner is as follows: (1) performing initialization: randomly selecting parameter values from parameter space to construct the random forest model; (2) obtaining the average value and the variance of the random forest based on a sampling strategy; (3) selecting the sample with the maximum benefit; (4) calculating the result of the new sample, and updating the random forest model; (5) if the quantity of iterations reaches the maximum quantity of iterations, outputting an optimal configuration parameter; or if the quantity of iterations does not reach the maximum quantity of iterations, performing steps 2 to 4.

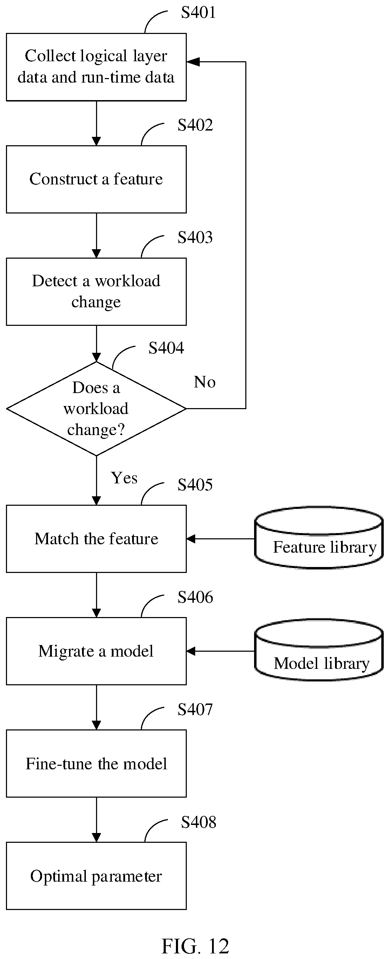

FIG. 12 is a flowchart of a parameter tuning method according to an embodiment of this application. The method is applied to an electronic device, and the parameter tuning method includes the following steps.

S401: Collect logical layer data and run-time data during running of an online application.

S402: Construct a feature of the online application.

In an embodiment of this application, key feature data of the application is collected in real time, to obtain a 10-dimensional statistical feature and a 36-dimensional time series feature.

S403: Detect a workload change.

In an embodiment of this application, a workload change detection algorithm based on the time series feature is designed for the online application, to automatically detect whether a workload of the application changes. Specifically, whether the workload of the online application changes needs to be detected in real time. If the workload changes, it indicates that an existing configuration parameter is not optimal, and needs to be tuned again. The workload change of the application usually result in changes in some indicators (such as a CPU and memory usage) in terms of values and change amplitudes. Therefore, the workload change detection algorithm based on the time series feature is designed. The workload change detection algorithm is divided into three steps. In a first step, various performance indicators of various applications are collected online, and data of each indicator can form a time series. In a second step, noise reduction, smoothing, and differential processing are performed on the time series to select an important indicator. In a third step, a distributed change point detection algorithm is used, and a change point detection algorithm based on a univariate time series is first used.

S404: Determine whether the workload changes. If the workload changes, the procedure proceeds to S405; or if the workload does not change, the procedure returns to S401.

S405: Match the feature of the online application with feature data in a feature library.

In an embodiment of this application, the key feature data of the application is collected in real time, to obtain the 10-dimensional statistical feature and the 36-dimensional time series feature. Dynamic feature matching and static feature matching are combined in a feature matching process. In this way, overall distribution and real-time dynamics of the application workload are considered. A DTW distance method for time series similarity is introduced into dynamic feature matching. Compared with a conventional Euclidean distance, the DTW distance can consider time translation and scaling in similarity calculation, and accuracy is higher. An application that is most similar to the current workload is obtained through matching, and a pre-trained model corresponding to the application is obtained from a model library. A large amount of data collected offline is used, to reduce costs of online training.

S406: Migrate a model, that is, obtain, from the model library, a parameter tuning model corresponding to the matched feature data in the feature library.

S407: Fine-tune the parameter tuning model based on workload data of the online application.

S408: Output, based on a fine-tuned parameter tuning model, an optimal parameter for running the online application.

In an embodiment of this application, a most matched model is migrated and fine-tuned based on the current application, to output an optimal configuration parameter. A tuner fine-tunes the model based on a most matched historical model and a small amount of data of the current workload, and outputs the optimal configuration parameters based on the fine-tuned model.

A product implementation form in this embodiment of this application is program code included in machine learning platform software and deployed on server hardware. The program code in this application is run in a host memory of a server, and can be classified into two parts: offline training and online detection. During offline training, a large amount of run-time data and statistical data in different application scenarios are collected, to construct a time series feature library and a statistical feature library, and model libraries are separately constructed for the different scenarios by using an offline training tuning algorithm. During online detection, the workload data of the online application is collected in real time, and a workload change detection algorithm is used to automatically detect whether the workload changes. If the workload changes, a changed feature of the application is matched with the feature library, to find a known model that is most matched. Based on the model and a small amount of data of the online application, the optimal parameter of the online application is output through model fine-tuning. This application has broad application value in terms of online performance optimization for a cloud-based application.

In this embodiment of this application, the workload change detection algorithm based on the time series feature is designed. In this way, time dimension information is considered, a workload change can be actively discovered in real time. A dynamic feature and a static feature are combined to construct an application profile model, and matching accuracy is higher. An embedding technology and a sampling strategy are used to improve a conventional intelligent parameter tuning speed, and to effectively process a plurality of parameters.

An embodiment of this application further provides a computer storage medium. The computer storage medium stores computer instructions, and when the computer instructions are run on an electronic device, the electronic device is enabled to perform the parameter tuning methods in the foregoing embodiments.

An embodiment of this application further provides a computer program product. When the computer program product is run on a computer, the computer is enabled to perform the parameter tuning methods in the foregoing embodiments.

In addition, an embodiment of this application further provides an apparatus. The apparatus can be specifically a chip, a component, or a module. The apparatus can include a processor and a memory that are connected. The memory is configured to store computer-executable instructions. When the apparatus runs, the processor can execute the computer-executable instructions stored in the memory, to enable the chip to perform the parameter tuning methods in the foregoing embodiments.

The electronic device, the computer storage medium, the computer program product, or the chip provided in embodiments of this application can be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method can be implemented in other manners. For example, the foregoing described apparatus embodiment is an example. For example, division into the modules or units is logical function division and can be other division during actual implementation. For example, a plurality of units or components can be combined or integrated into another apparatus, or some features can be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

The units described as separate components can or cannot be physically separate. A component displayed as a unit can be one or more physical units, that is, can be located in one place, or can be distributed in a plurality of different places. Some or all of the units can be selected based on actual requirements to achieve the objectives of the solutions of embodiments.

In addition, functional units in embodiments of this application can be integrated into one processing unit, or each of the units can exist alone physically, or two or more units can be integrated into one unit. The integrated unit can be implemented in a form of hardware, or can be implemented in a form of a software functional unit.

When the integrated unit is implemented in a form of a software functional unit and sold or used as an independent product, the integrated unit can be stored in a readable storage medium. Based on such an understanding, the technical solutions of embodiments of this application essentially, or the part contributing to the prior art, or all or some of the technical solutions can be implemented in the form of a software product. The software product is stored in a storage medium and includes several instructions for instructing a device (which can be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements can be made to the technical solutions of this application, without departing from the spirit and scope of the technical solutions of this application.

**Claims**

1. A parameter tuning method, wherein the parameter tuning method comprises:

   detecting whether a workload changes when an electronic device runs an online application;
   if the workload changes when the electronic device runs the online application, obtaining feature data of the online application, matching the feature data with feature data in a feature library, and determining an application and a workload type that are in the feature library and that match the online application;
   selecting, from a model library, a parameter tuning model corresponding to the application and the workload type that match the online application; and
   determining, based on the selected parameter tuning model, an optimal parameter for running the online application.

2. The parameter tuning method according to claim 1, wherein the detecting whether a workload changes when an electronic device runs an online application comprises:

   collecting key data of the online application, and generating a time series of the key data;
   detecting whether data distribution before and after any data in the time series changes; and
   if the data distribution before and after the any data in the time series changes, determining that the workload of the online application changes; or
   if data distribution before and after all data in the time series does not change, determining that the workload of the online application does not change.

3. The parameter tuning method according to claim 2, wherein the detecting whether data distribution before and after any data in the time series changes comprises:
   detecting, based on average values and variances of data on left and right sides of the any data in the time series, whether the data distribution before and after the data changes.

4. The parameter tuning method according to claim 3, wherein the detecting, based on average values and variances of data on left and right sides of the any data in the time series, whether the data distribution before and after the data changes comprises:

   calculating an average value change and a variance change of the corresponding data on the left and right sides of the any data in the time series;
   determining whether the average value change is greater than a first threshold, whether the variance change is greater than a second threshold, and whether both the average value change and the variance change are greater than a third threshold; and
   if the average value change is greater than the first threshold, or the variance change is greater than the second threshold, or both the average value change and the variance change are greater than the third threshold, determining that the data distribution before and after the data changes; or

if the average value change is less than or equal to the first threshold, the variance change is less than or equal to the second threshold, and both the average value change and the variance change are less than or equal to the third threshold, determining that the data distribution before and after the data does not change.

5.  The parameter tuning method according to claim 1, wherein the obtaining feature data of the online application comprises:
collecting key data of the online application, converting the collected key data into the feature data, and preprocessing the feature data, to obtain a statistical feature and a time series feature of the online application.

6.  The parameter tuning method according to claim 5, wherein the matching the feature data with feature data in a feature library, and determining an application and a workload type that are in the feature library and that match the online application comprises:

    matching the statistical feature of the online application with a statistical feature of each group of feature data in the feature library, and determining a first similarity value between the statistical feature of the online application and the statistical feature of each group of feature data in the feature library;
    matching the time series feature of the online application with a time series feature of each group of feature data in the feature library, and determining a second similarity value between the time series feature of the online application and the time series feature of each group of feature data in the feature library; and
    determining, based on the first similarity value and the second similarity value, the application and the workload type that are in the feature library and that match the online application.

7.  The parameter tuning method according to claim 6, wherein the determining a first similarity value between the statistical feature of the online application and the statistical feature of each group of feature data in the feature library comprises:
calculating a sum of squared differences between a statistical feature of each dimension of the online application and a statistical feature of a corresponding dimension of each group of feature data in the feature library, to obtain the first similarity value between the statistical feature of the online application and the statistical feature of each group of feature data in the feature library.

8.  The parameter tuning method according to claim 6, wherein the determining a second similarity value between the time series feature of the online application and the time series feature of each group of feature data in the feature library comprises:
determining the second similarity value between the time series feature of the online application and the time series feature of each group of feature data in the feature library according to a dynamic time warping distance method for time series similarity.

9.  The parameter tuning method according to claim 6, wherein the determining, based on the first similarity value and the second similarity value, the application and the workload type that are in the feature library and that match the online application comprises:

    calculating a sum of the first similarity value obtained by matching the statistical feature of the online application with the statistical feature of each group of feature data in the feature library and the second similarity value obtained by matching the time series feature of the online application with the time series feature of each group of feature data in the feature library;
    determining a minimum sum value of the first similarity value and the second similarity value; and
    determining an application and a workload type that are in the feature library and that are of feature data corresponding to the minimum sum value as the application and the workload type that match the online application.

10. The parameter tuning method according to claim 1, wherein the method further comprises:

    collecting feature data that is of a plurality of applications and that corresponds to different workload types, and constructing the feature library; and
    training a preset model based on parameter samples that are of the plurality of applications and that correspond to the workload types, to construct a parameter tuning model that is of each application and that corresponds to a workload type, and constructing the model library based on parameter tuning models that are of the plurality of applications and that correspond to the workload types.

11. The parameter tuning method according to claim 10, wherein the collecting feature data that is of a plurality of applications and that corresponds to different workload types, and constructing the feature library comprises:

collecting key data that is of the applications and that corresponds to each workload type;
converting the collected key data into the feature data of the applications, and preprocessing the feature data of the applications, to obtain a statistical feature and a time series feature of the key data of the applications; and
constructing the feature library based on the statistical feature and the time series feature that are of the plurality of applications and that correspond to each workload type.

12. The parameter tuning method according to claim 11, wherein the key data comprises logical layer data and run-time data.

13. The parameter tuning method according to claim 12, wherein the converting the collected key data into feature data of the applications, and preprocessing the feature data of the applications, to obtain a statistical feature and a time series feature of the key data of the applications comprises:

converting the collected logical layer data of the applications into the statistical feature of the applications, and converting the collected run-time data of the applications into the time series feature of the applications; and performing preprocessing, namely, aggregation, noise reduction, normalization, and clustering on the feature data of the applications, to obtain the statistical feature of a first preset dimension and the time series feature of a second preset dimension.

14. The parameter tuning method according to claim 10, wherein the training a preset model based on parameter samples that are of the plurality of applications and that correspond to the workload types, to construct a parameter tuning model that is of each application and that corresponds to a workload type comprises:

presetting a parameter sample that is of the application and that corresponds to the workload type, wherein the parameter sample comprises a plurality of parameters and a plurality of pieces of data corresponding to each parameter;
selecting a plurality of groups of first parameters from the parameter sample, and determining first performance data corresponding to each group of first parameters; and
constructing a pre-trained random forest model based on the plurality of groups of first parameters and the first performance data corresponding to each group of first parameters.

15. The parameter tuning method according to claim 14, wherein the selecting a plurality of groups of first parameters from the parameter sample, and determining first performance data corresponding to each group of first parameters comprises:

randomly selecting the plurality of groups of first parameters from the parameter sample, wherein each group of first parameters comprises data corresponding to a plurality of parameters; and
running, by the electronic device, the application based on each group of first parameters, and obtaining performance data in a running process after running of the application is completed, to obtain the first performance data corresponding to each group of first parameters.

16. The parameter tuning method according to claim 14, wherein the constructing a pre-trained random forest model based on the plurality of groups of first parameters and the first performance data corresponding to each group of first parameters comprises:
using each group of first parameters as input data of the random forest model, using the first performance data corresponding to each group of first parameters as output data of the random forest model, and performing parameter tuning on the random forest model based on the input data and the output data, to complete construction of the pre-trained random forest model.

17. The parameter tuning method according to claim 14, wherein the training a preset model based on parameter samples that are of the plurality of applications and that correspond to the workload types, to construct a parameter tuning model that is of each application and that corresponds to a workload type further comprises:

selecting a plurality of groups of second parameters from the parameter sample, and inputting the plurality of groups of second parameters into the pre-trained random forest model, to obtain second performance data predicted by each decision tree in the pre-trained random forest model;

calculating an average value and a standard deviation of the pre-trained random forest model based on the second performance data predicted by all decision trees;

calculating a plurality of output values of an acquisition function of a Bayesian optimization algorithm based on the average value and the standard deviation of the pre-trained random forest model; and

determining a third parameter based on a largest output value of the acquisition function, and training the pre-trained random forest model based on the third parameter.

18. The parameter tuning method according to claim 17, wherein the selecting a plurality of groups of second parameters from the parameter sample, and inputting the plurality of groups of second parameters into the pre-trained random forest model, to obtain second performance data predicted by each decision tree in the pre-trained random forest model comprises:

selecting the plurality of groups of second parameters from the parameter sample based on a preset sampling strategy, randomly inputting the plurality of groups of second parameters into a plurality of decision trees in the pre-trained random forest model, and outputting, by using each decision tree, the second performance data corresponding to each group of second parameters.

19. The parameter tuning method according to claim 17, wherein the preset sampling strategy is selecting, from the parameter sample, a preset quantity of groups of parameters that maximize the acquisition function as a start point, and finding a neighbor point by using a random neighbor method.

20. The parameter tuning method according to claim 17, wherein the determining a third parameter based on a largest output value of the acquisition function, and training the pre-trained random forest model based on the third parameter comprises:

running, by the electronic device, the application based on the third parameter, obtaining third performance data corresponding to the third parameter after running of the application is completed, and continuing to train the pre-trained random forest model based on the third parameter and the third performance data, to complete update of the pre-trained random forest model.

21. The parameter tuning method according to claim 17, wherein the training a preset model based on parameter samples that are of the plurality of applications and that correspond to the workload types, to construct a parameter tuning model that is of each application and that corresponds to a workload type further comprises:

determining whether a current quantity of iterations reaches a first quantity of iterations; and

if the current quantity of iterations reaches the first quantity of iterations, determining, based on the current pre-trained random forest model, the parameter tuning model that is of the application and that corresponds to the workload type, and outputting, by using the current pre-trained random forest model, an optimal parameter that is in the parameter sample and that optimizes performance data.

22. The parameter tuning method according to claim 21, wherein the outputting, by using the current pre-trained random forest model, an optimal parameter that is in the parameter sample and that optimizes performance data comprises:

inputting a plurality of groups of preset parameters in the parameter sample into the current pre-trained random forest model, to obtain performance data respectively corresponding to the plurality of groups of preset parameters; and

determining optimal performance data in the performance data respectively corresponding to the plurality of groups of preset parameters, and determining a group of preset parameters corresponding to the optimal performance data as the optimal parameter that is in the parameter sample and that optimizes the performance data.

23. The parameter tuning method according to claim 1, wherein the determining, based on the selected parameter tuning model, an optimal parameter for running the online application comprises:

tuning the selected parameter tuning model based on a parameter sample of the online application; and

outputting, based on the tuned parameter tuning model, the optimal parameter for running the online application.

24. The parameter tuning method according to claim 23, wherein the tuning the selected parameter tuning model based on a parameter sample of the online application comprises:

training the parameter tuning model based on a plurality of groups of parameters in the parameter sample of the online application, corresponding performance data, and a second quantity of iterations, to complete tuning of the parameter tuning model.

25. The parameter tuning method according to claim 23, wherein the outputting, based on the tuned parameter tuning model, the optimal parameter for running the online application comprises:

inputting a plurality of groups of parameters of the online application into the tuned parameter tuning model, to obtain performance data respectively corresponding to the plurality of groups of parameters of the online application; and
determining optimal performance data in the performance data respectively corresponding to the plurality of groups of preset parameters of the online application, determining a parameter corresponding to the optimal performance data as the optimal parameter for running the online application by the electronic device, and outputting the optimal parameter.

26. A computer-readable storage medium, comprising computer instructions, wherein when the computer instructions are run on an electronic device, the electronic device is enabled to perform the parameter tuning method according to any one of claims 1 to 25.

27. An electronic device, wherein the electronic device comprises a processor and a memory, the memory is configured to store instructions, and the processor is configured to invoke the instructions in the memory, to enable the electronic device to perform the parameter tuning method according to any one of claims 1 to 25.

28. A chip, coupled to a memory in an electronic device, wherein the chip is configured to control the electronic device to perform the parameter tuning method according to any one of claims 1 to 25.

Electronic device 10

Antenna 1                                    Antenna 2

| Mobile communication module [130] | | Wireless communication module [140] |
|---|---|---|

| Audio module [150] | | Display [180] |
|---|---|---|
| Internal memory [121] | Processor [110] | Camera module [170] |
| External memory interface [120] | | Sensor module [160] |

FIG. 1

FIG. 2

FIG. 3

S101

| Collect feature data that is of a plurality of applications and that corresponds to different workload types, and construct a feature library |
|---|

S102

| Train a preset model based on parameter samples that are of the plurality of applications and that correspond to the workload types, to construct a parameter tuning model that is of each application and that corresponds to a workload type, and construct a model library based on parameter tuning models that are of the plurality of applications and that correspond to the workload types |
|---|

FIG. 4

S1011

| Collect key data that is of applications and that corresponds to each workload type |
|---|

S1012

| Convert the collected key data into feature data, and preprocess the feature data, to obtain a statistical feature and a time series feature |
|---|

S1013

| Construct a feature library based on the statistical feature and the time series feature that are of the plurality of applications and that correspond to each workload type |
|---|

FIG. 5

S1021

Preset a parameter sample that is of an application and that corresponds to a workload type, and a first quantity of iterations

S1022

Select a plurality of groups of first parameters from the parameter sample, and determine first performance data corresponding to each group of first parameters

S1023

Construct a pre-trained random forest model based on the plurality of groups of first parameters and the first performance data corresponding to each group of first parameters

S1024

Select a plurality of groups of second parameters from the parameter sample, and input the plurality of groups of second parameters into the pre-trained random forest model, to obtain second performance data output by each decision tree in the pre-trained random forest model

S1025

Calculate an average value and a standard deviation of the pre-trained random forest model based on second performance data predicted by all decision trees

S1026

Calculate a plurality of output values of an acquisition function of a Bayesian optimization algorithm based on the average value and the standard deviation of the pre-trained random forest model

S1027

Determine a third parameter based on a largest output value of the acquisition function, and train the pre-trained random forest model based on the third parameter

S1028

Determine whether a current quantity of iterations reaches the first quantity of iterations

No

Yes

S1029

Determine, based on the current pre-trained random forest model, a parameter tuning model that is of the application and that corresponds to the workload type, and output, by using the current pre-trained random forest model, an optimal parameter that is in the parameter sample and that optimizes performance data

FIG. 6

Detect whether a
workload changes when an electronic device
runs an online application — S201

No

Yes

Obtain feature data of the online application, match the feature data with feature data in a feature library, and determine an application and a workload type that are in the feature library and that match the online application — S202

Select, from a model library, a parameter tuning model corresponding to the application and the workload type that match the online application — S203

Determine, based on the selected parameter tuning model, an optimal parameter for running the online application — S204

FIG. 7

Collect key data of an online application, and generate a time series of the key data — S2011

Preprocess the time series of the key data — S2012

Detect whether data
distribution before and after any data in the
time series changes — S2013

No

Yes

Determine that a workload changes when an electronic device runs the online application — S2014

FIG. 8

S2021

Collect key data of an online application, convert the collected key data into feature data, and preprocess the feature data, to obtain a statistical feature and a time series feature

S2022

Match the statistical feature of the online application with a statistical feature of each group of feature data in a feature library, and determine a first similarity value between the statistical feature of the online application and the statistical feature of each group of feature data in the feature library

S2023

Determine, based on the first similarity value and a second similarity value, an application and a workload type that are in the feature library and that match the online application

S2024

Select, from a model library, a parameter tuning model corresponding to the application and the workload type that match the online application

FIG. 9

S2041

Tune a selected parameter tuning model based on a parameter sample of an online application

S2042

Output, based on the tuned parameter tuning model, an optimal parameter for running the online application

FIG. 10

S301

Collect logical layer data and run-time data

S302

Perform preprocessing: aggregation, noise reduction, and padding

S303

Normalize the data

S304

Construct a key feature through clustering

S305

Feature library

S306

Randomly select a sample

S307

Is a maximum quantity of iterations reached?

Yes

No

S308

Perform large-scale sampling to obtain an average value and a variance of a random forest

S309

Select a sample with a maximum benefit

S310

Calculate a result of a new sample

S311

Update the random forest

S312

Optimal model

S313

Model library

FIG. 11

S401

Collect logical layer
data and run-time data

S402

Construct a feature

S403

Detect a workload
change

S404

Does a
workload
change?

No

Yes    S405

Match the feature ◄──── Feature library

S406

Migrate a model ◄──── Model library

S407

Fine-tune the model

S408

Optimal parameter

FIG. 12

# INTERNATIONAL SEARCH REPORT

| International application No. |
|---|
| **PCT/CN2023/103441** |

| A. | CLASSIFICATION OF SUBJECT MATTER |
|---|---|

G06F 9/4401(2018.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, DWPI, CNTXT, ENTXT, ENTXTC, CNKI: 参数, 应用, 特征, 匹配, 模型, 调优, 优化, parameter, application, feature, match, model, optimize

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113032367 A (ANHUI UNIVERSITY) 25 June 2021 (2021-06-25)<br>description, paragraphs [0117]-[0159] | 1-28 |
| A | CN 114706840 A (HOHAI UNIVERSITY) 05 July 2022 (2022-07-05)<br>entire document | 1-28 |
| A | US 2009271152 A1 (ALCATEL) 29 October 2009 (2009-10-29)<br>entire document | 1-28 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 September 2023** | **05 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/103441**

| Patent document cited in search report | | | Publication date (day/month/year) | Patent family member(s) | Publication date (day/month/year) |
|---|---|---|---|---|---|
| CN | 113032367 | A | 25 June 2021 | None | |
| CN | 114706840 | A | 05 July 2022 | None | |
| US | 2009271152 | A1 | 29 October 2009 | None | |

Form PCT/ISA/210 (patent family annex) (July 2022)

**REFERENCES CITED IN THE DESCRIPTION**

**Patent documents cited in the description**

- CN 202211050001